(19)

Europäisches
Patentamt
European
Patent Office
Office européen
des brevets

(11) **EP 4 546 859 A1**

(12) **EUROPEAN PATENT APPLICATION**
published in accordance with Art. 153(4) EPC

(43) Date of publication:
**30.04.2025 Bulletin 2025/18**

(21) Application number: **23825980.8**

(22) Date of filing: **05.05.2023**

(51) International Patent Classification (IPC):
**H04W 24/10** (2009.01)

(52) Cooperative Patent Classification (CPC):
**H04L 5/00; H04W 24/10**

(86) International application number:
**PCT/CN2023/092256**

(87) International publication number:
**WO 2023/246329 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.06.2022 CN 202210725088**

(71) Applicant: **Datang Mobile Communications
Equipment Co., Ltd.
Beijing 100085 (CN)**

(72) Inventors:
• **SONG, Lei
Beijing 100085 (CN)**
• **SU, Xin
Beijing 100085 (CN)**
• **ZHANG, Xin
Beijing 100085 (CN)**

(74) Representative: **Studio Torta S.p.A.
Via Viotti, 9
10121 Torino (IT)**

(54) **MEASUREMENT REPORTING METHOD, APPARATUS, AND COMMUNICATION DEVICE**

(57)    The present disclosure provides a measurement and reporting method, device and communication device, which solve the problem of optimal beam information of single hop links in the RIS system or relay system cannot be obtained through relevant technologies. The measurement and reporting method in the embodiment of the present disclosure includes: obtaining, by a first node device, first information, where the first node device is used for transmission with a terminal and/or a network side device; performing, by the first node device, measurement and reporting according to the first information. The first information includes at least one of first measurement and reporting configuration information, first measurement resource configuration information, and first predefined information.

obtaining, by first node device, first information ⟿ 201

performing, by first node device,
measurement and reporting according to the first information ⟿ 202

FIG. 2

EP 4 546 859 A1

**Description**

**CROSS-REFERENCE TO RELATED APPLICATION**

The present application is filed based on and claims the priority of Chinese Application No. 202210725088.8 filed on June 23, 2022, the disclosure of which are incorporated in their entireties by reference herein.

**TECHNICAL FIELD**

The present disclosure relates to the field of communication technologies, and in particular, to a measurement and reporting method, device and communication device.

**BACKGROUND**

In a Reconfigurable Intelligent Surface (RIS) system or relay system, a RIS node or relay node cannot measure and report a beam management signal sent by a network side, and thus it is impossible to determine optimal transmission beam of a network side device. Then, optimal beam information of a link between the RIS node or relay node and the network side device cannot be obtained, and optimal beam information of a link between the RIS node or relay node and a terminal cannot be obtained. Therefore, optimal beam information of single hop links (such as a link between the RIS node or relay node and the network side device, or a link between the RIS nodes or relay node and the terminal) in the RIS system or relay system cannot be obtained through relevant technologies.

**SUMMARY**

An object of the present disclosure is to provide a measurement and reporting method, device and communication device, which can solve the problem that the optimal beam information of single hop links in the RIS system or relay system cannot be obtained through relevant technologies.

In order to achieve the above object, the present disclosure provides a measurement and reporting method, including:

obtaining, by a first node device, first information, wherein the first node device is used for transmission with a terminal and/or a network side device;
performing, by the first node device, measurement and reporting according to the first information;
wherein the first information includes at least one of first measurement and reporting configuration information, first measurement resource configuration information, and first predefined information.

Optionally, the performing, by the first node device, measurement and reporting according to the first information, includes reporting at least one of the following measurement processes:

transmitting beam sweeping process of the network side device;
receiving beam sweeping process of a second node device;
transmitting beam sweeping process of the second node device;
adjustment matrix training process of the second node device;
wherein the second node device is used to forward a signal sent by the network side device for the terminal, or used to forward a signal sent by the terminal for the network side device.

Optionally, the obtaining, by a first node device, first information, includes:
obtaining first measurement resource configuration information according to a first predefined rule or the first measurement and reporting configuration information.
Optionally, the performing, by the first node device, measurement and reporting according to the first information, includes:
measuring, by the first node device, a first measurement resource corresponding to the first measurement resource configuration information, and reporting a measurement result.
Optionally, the first measurement resource configuration information includes at least one indication parameter; the at least one indication parameter is used to indicate quasi-co-located QCL information of the first measurement resource;
the measuring, by the first node device, a first measurement resource corresponding to the first measurement resource configuration information, includes:

measuring the first measurement resource according to the indication parameter.

Optionally, the performing, by the first node device, measurement and reporting according to the first information, includes:

in the case where the at least one indication parameter is configured as a first value, reporting, by the first node device, first content, wherein the first content includes at least one of a channel state information reference signal resource indication CRI and a synchronization signal block resource indication SSB RI;

wherein when the at least one indication parameter is configured as the first value, QCL information of at least two resources in the first measurement resources is different.

Optionally, the performing, by the first node device, measurement and reporting according to the first information, includes:

determining a first reporting resource according to an indication of the network side device or a second predefined rule; performing the measurement report on the first reporting resource.

Optionally, the method in one embodiment of the present disclosure further includes:
reporting relevant information of the adjustment matrix of the first node device, wherein the relevant information of the adjustment matrix includes at least one of codebook and precoding information; wherein the adjustment matrix is used to perform receiving and/or sending processing on the first node device.

Optionally, the first measurement and reporting configuration information further includes: first indication information for indicating the control node to report the relevant information of the adjustment matrix; and
the reporting the relevant information of the adjustment matrix of the first node device, includes:
according to the first indication information, reporting the relevant information of the adjustment matrix.

Optionally, the method in one embodiment of the present disclosure further includes:

obtaining relevant information of the adjustment matrix indicated by the network side device; wherein the relevant information of the adjustment matrix includes at least one of codebook and precoding information, and the adjustment matrix is used to perform receiving and/or sending processing on the first node device;
according to the relevant information of the adjustment matrix, determining the adjustment matrix of the first node device.

Optionally, the codebook includes at least one of the following:

codebook about matrix $W_T Ø W_R$;
codebook about matrix $W_T W_R Ø$;
codebook about matrix $W_R Ø$;
codebook about matrix $W_T$;
codebook about matrix $Ø$;
codebook about matrix $W_R$;
codebook about matrix $W_T Ø$;
codebook about matrix $Ø W_R$;
wherein $W_T$ is used by the first node device to perform transmission processing on the signal sent to the terminal; $W_R$ is used by the first node device to perform receiving process on the signal sent by the network side device, and $Ø$ is used for phase control.

Optionally, the first node device includes a control node, the control node is used to adjust or control the second node device, and the second node device includes an RIS node or a relay node.

One embodiment of the present disclosure further provides a measurement and reporting method, including:

obtaining, by a terminal, first information; wherein the first link is a transmission link between a network side device and the terminal, and the second link is a transmission link between the terminal and a first node device, the first node device is used for transmission with the terminal and/or the network side device
performing, by the terminal, measurement and reporting on a first link or a second link according to the first information;
wherein the first information includes at least one of second measurement and reporting configuration information, second measurement resource configuration information, and second predefined information.

Optionally, in the method of the embodiment of the present disclosure, the obtaining, by a terminal, first information, includes:

obtaining second measurement resource configuration information according to a third predefined rule or the second measurement and reporting configuration information.

Optionally, the second measurement resource configuration information includes at least one indication parameter, and the at least one indication parameter is used to indicate QCL information of the second measurement resource corresponding to the second measurement resource configuration information;

the performing, by the terminal, beam measurement and reporting on the first link or the second link according to the first information, includes:

measuring, by the terminal, the second measurement resource for the first link or the second link according to the indication parameter.

Optionally, in the method of the embodiment of the present disclosure, the performing, by the terminal, measurement and reporting on a first link or a second link according to the first information, includes:

in case where the at least one indication parameter is configured as a first value, reporting, by the terminal, first content, wherein the first content includes at least one of CRI and SSB RI;

wherein when the at least one indication parameter is configured as the first value, QCL information of at least two resources in the second measurement resources is different. For example, the first value is "off".

Optionally, the measurement and reporting configuration information further includes: reception filter information of the terminal.

One embodiment of the present disclosure further provides a measurement and reporting method, including: sending, by a network side device, first information, wherein the first information is used to indicate a first node device to perform measurement and reporting and/or to indicate a terminal to perform measurement and reporting for a first link or a second link, wherein the first node device is used to perform transmission with the terminal and/or the network side device, the first link is a transmission link between the network side device and the terminal, and the second link is a transmission link between the terminal and the first node device.

Optionally, the first information includes at least one of the following:

first measurement and reporting configuration information, first measurement resource configuration information and/or first predefined information;

second measurement and reporting configuration information, second measurement resource configuration information and/or second predefined information.

Optionally, the first measurement resource configuration information includes at least one indication parameter; the at least one indication parameter is used to indicate QCL information of a first measurement resource corresponding to the first measurement resource configuration information;

or, the second measurement resource configuration information includes at least one indication parameter, and the at least one indication parameter is used to indicate QCL information of a second measurement resource corresponding to the second measurement resource configuration information.

One embodiment of the present disclosure further provides a measurement and reporting device, applied to a first node device, including: a memory, a transceiver, and a processor;

wherein the memory is used to store a computer program; the transceiver is used to send and receive data under the control of the processor; the processor is used to read the computer program in the memory and perform the following operations:

obtaining first information, wherein the first node device is used for transmission with a terminal and/or a network side device;

performing measurement and reporting according to the first information;

wherein the first information includes at least one of first measurement and reporting configuration information, first measurement resource configuration information, and first predefined information.

Optionally, the processor is used to execute the computer program to perform the following operations:

reporting at least one of the following measurement processes:
transmitting beam sweeping process of the network side device;
receiving beam sweeping process of a second node device;
transmitting beam sweeping process of the second node device;
adjustment matrix training process of the second node device.

Optionally, the processor is used to execute the computer program to perform the following operations: obtaining first measurement resource configuration information according to a first predefined rule or the first measurement and reporting configuration information.

Optionally, the processor is used to execute the computer program to perform the following operations: measuring a first measurement resource corresponding to the first measurement resource configuration information, and reporting a measurement result.

One embodiment of the present disclosure further provides a measurement and reporting device, applied to a terminal, including: a memory, a transceiver, and a processor;

wherein the memory is used to store a computer program; the transceiver is used to send and receive data under the control of the processor; the processor is used to read the computer program in the memory and perform the following operations:

> obtaining first information; wherein a first link is a transmission link between a network side device and the terminal, and a second link is a transmission link between the terminal and a first node device, the first node device is used for transmission with the terminal and/or the network side device;
> performing measurement and reporting on a first link or a second link according to the first information;
> wherein the first information includes at least one of second measurement and reporting configuration information, second measurement resource configuration information, and second predefined information.

Optionally, the processor is used to execute the computer program to perform the following operations: obtaining second measurement resource configuration information according to a third predefined rule or the second measurement and reporting configuration information.

Optionally, the second measurement resource configuration information includes at least one indication parameter, and the at least one indication parameter is used to indicate QCL information of the second measurement resource corresponding to the second measurement resource configuration information;

the processor is used to execute the computer program to perform the following operations:

measuring the second measurement resource for the first link or the second link according to the indication parameter.

One embodiment of the present disclosure further provides a measurement and reporting device, applied to a network side device, including: a memory, a transceiver, and a processor;

wherein the memory is used to store a computer program; the transceiver is used to send and receive data under the control of the processor; the processor is used to read the computer program in the memory and perform the following operations:

sending first information, wherein the first information is used to indicate a first node device to perform measurement and reporting and/or to indicate a terminal to perform measurement and reporting for a first link or a second link, wherein the first node device is used to perform transmission with the terminal and/or the network side device, the first link is a transmission link between the network side device and the terminal, and the second link is a transmission link between the terminal and the first node device.

One embodiment of the present disclosure further provides a measurement and reporting device, applied to a first node device, including:

> a first obtaining unit used to obtain first information, wherein the first node device is used for transmission with a terminal and/or a network side device;
> a first reporting unit used to perform measurement and reporting according to the first information;
> wherein the first information includes at least one of first measurement and reporting configuration information, first measurement resource configuration information, and first predefined information.

One embodiment of the present disclosure further provides a measurement and reporting device, applied to a terminal, including:

> a second obtaining unit used to obtain first information; wherein a first link is a transmission link between a network side device and the terminal, and a second link is a transmission link between the terminal and a first node device, the first node device is used for transmission with the terminal and/or the network side device;
> a second reporting unit used to perform measurement and reporting on a first link or a second link according to the first information;
> wherein the first information includes at least one of second measurement and reporting configuration information, second measurement resource configuration information, and second predefined information.

One embodiment of the present disclosure further provides a measurement and reporting device, applied to a network side device, including:

a first sending unit used to send first information, wherein the first information is used to indicate a first node device to perform measurement and reporting and/or to indicate a terminal to perform measurement and reporting for a first link or a second link, where the first node device is used to perform transmission with the terminal and/or the network side device, the first link is a transmission link between the network side device and the terminal, and the second link is a transmission link between the terminal and the first node device.

One embodiment of the present disclosure further provides a processor-readable storage medium, including: program instructions stored thereon; wherein the program instructions are used to cause a processor to perform steps of the above measurement and reporting method.

The above technical solution of the present disclosure has at least the following beneficial effects.

In the above technical solution of the embodiment of the present disclosure, the first node device that performs transmission with the terminal and/or the network side device can perform measurement and reporting according to the first information sent by the network side device, such as performing beam measurement and reporting, thereby obtaining optimal beam information for single-hop link between the first node device and the network side device.

## BRIEF DESCRIPTION OF THE DRAWINGS

FIG. 1 shows a schematic diagram of an applicable network system according to an embodiment of the present disclosure;

FIG. 2 is a first schematic flowchart of a measurement and reporting method according to an embodiment of the present disclosure;

FIG. 3 shows transmission directions of uplink and downlink channels between nodes in a system according to an embodiment of the present disclosure;

FIG. 4 is a schematic diagram showing signal transmission according to an embodiment of the present disclosure;

FIG. 5 is a first schematic diagram showing a control node assisting RIS in performing receiving beam sweeping according to an embodiment of the present disclosure;

FIG. 6 is a second schematic diagram showing a control node assisting RIS in performing receiving beam sweeping according to an embodiment of the present disclosure;

FIG. 7 is a second schematic flowchart of a measurement and reporting method according to an embodiment of the present disclosure;

FIG. 8 is a third schematic flowchart of a measurement and reporting method according to an embodiment of the present disclosure;

FIG. 9 is a first schematic diagram of a measurement and reporting device according to an embodiment of the present disclosure;

FIG. 10 is a second schematic diagram of a measurement and reporting device according to an embodiment of the present disclosure;

FIG. 11 is a third schematic diagram of a measurement and reporting device according to an embodiment of the present disclosure;

FIG. 12 is a first schematic diagram showing modules of a measurement and reporting device according to an embodiment of the present disclosure;

FIG. 13 is a second schematic diagram showing modules of a measurement and reporting device according to an embodiment of the present disclosure; and

FIG. 14 is a third schematic diagram showing modules of a measurement and reporting device according to an embodiment of the present disclosure.

## DETAILED DESCRIPTION

The technical solution of the embodiment of the present disclosure may be applied to various systems. For example, applicable systems may be Global System of Mobile communication (GSM) system, Code Division Multiple Access (CDMA) system, Wideband Code Division Multiple Access (WCDMA) system, Time Division Synchronous Code Division Multiple Access (TD-SCDMA) system, General Packet Radio Service (GPRS) system, Long Term Evolution (LTE) system (including TD-LTE and FDD LTE), Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (5GS/5GC).

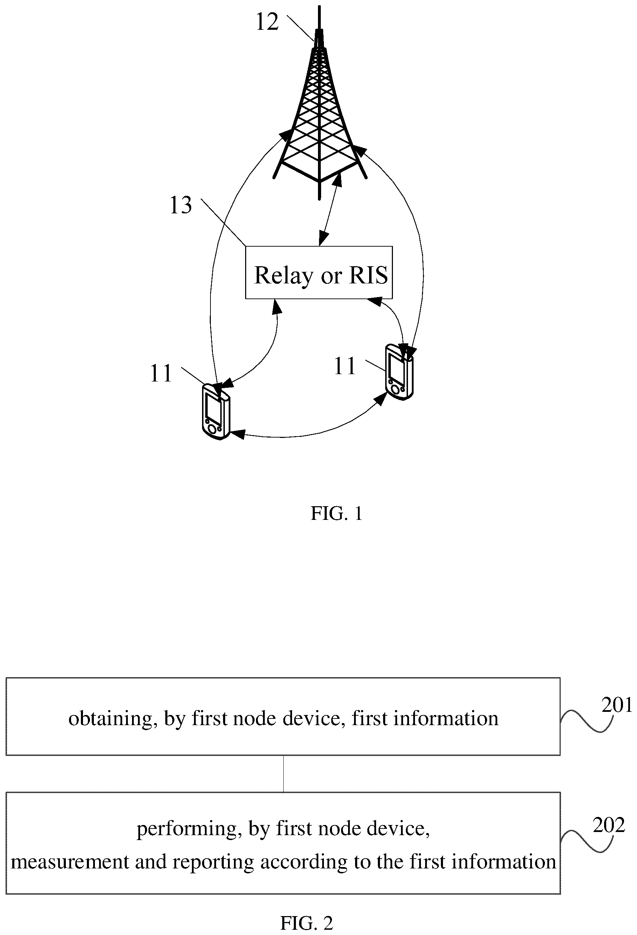

FIG. 1 shows a schematic diagram of an applicable network system according to an embodiment of the present disclosure. The wireless communication system includes a terminal 11, a network device 12 and a relay system (or RIS system). The terminal 11 may also be called a terminal device or a user terminal (UE). The terminal 11 may be a terminal-side device, such as a mobile phone, a tablet personal computer, a laptop computer which is also referred as a notebook computer, a personal digital assistant (PDA), handheld computer, netbook, ultra-mobile personal computer (UMPC), mobile Internet device (MID), wearable device or Vehicle User Equipment (VUE), pedestrian User Equipment (PUE). The wearable device includes: bracelets, headphones, glasses, etc. It is to be noted that the specific type of the terminal 11 is not limited in the embodiment of the present disclosure. The network device 12 may be a base station or a core network. The base station may be referred to as a Node B, an evolved Node B, an access point, a Base Transceiver Station (BTS), a radio base station, a radio transceiver, a Basic Service Set (BSS), Extended Service Set (ESS), B node, evolved B node (eNB), home B node, home evolved B node, Wireless Local Area Networks (WLAN) access point, Wireless Fidelity (WiFi) node, Transmitting Receiving Point (TRP) or some other suitable term in the field, as long as the same technical effect is achieved, the base station is not limited to specific technical term. It is to be noted that in the embodiment of the present disclosure, the base station in the NR system is only taken as an example, but the specific type of the base station is not limited.

The technical solutions in the embodiments of the present disclosure will be clearly and completely described below with reference to the accompanying drawings in the embodiments of the present disclosure. Obviously, the described embodiments are only some embodiments of the present disclosure, rather than all embodiments. Based on the embodiments in the present disclosure, all other embodiments obtained by those of ordinary skill in the art without creative efforts fall within the scope of protection of the present disclosure.

In order to enable those skilled in the art to better understand the embodiments of the present disclosure, the following description is provided first.

Reconfigurable Intelligent Surface (RIS) is a candidate technology for 6G and has the characteristics of low cost, low energy consumption, programmability, and easy deployment. The RIS is an electromagnetic active surface with communication capabilities and is composed of a large-scale device array and an array control module. The array control module can be used to control response of each device unit to radio signals, such as amplitude, phase, frequency, and polarization. Through mutual superposition of radio response signals of device units of the large-scale device array, specific beam propagation characteristics are formed at a macro level, thereby forming a controllable intelligent radio environment.

Relay system includes a smart repeater or network-controlled repeater in NR, and further includes relay system used to forward network-side signals in other systems, which can provide forwarding services for terminals at the edge of network coverage or outside of network coverage, thereby improving system performance.

As shown in FIG. 2, one embodiment of the present disclosure provides a measurement and reporting method. The method is applied to a RIS system or a relay system. The RIS system or relay system includes a terminal, a network side device, or a first node device. The method includes:

Step 201: obtaining, by the first node device, first information, where the first node device is used for transmission with the terminal and/or the network side device.

Optionally, the first node device performing measurement and reporting based on the first information, includes reporting at least one of the following measurement processes:

transmitting beam sweeping process of the network side device;
receiving beam sweeping process of a second node device;
transmitting beam sweeping process of the second node device;
adjustment matrix training process of the second node device.

The second node device is used to forward a signal sent by the network side device for the terminal, or used to forward a signal sent by the terminal for the network side device.

Optionally, the first node device includes a control node. The control node is used to adjust or control the second node device. The second node device includes a RIS node or a relay node. Since the RIS node or relay node does not have digital signal processing capabilities for signals or is only used for signal forwarding, the control node with digital signal processing capabilities can be introduced to control the RIS node or relay node. It is to be noted that the above first node device and second node device may be integrated into one device, or may be two independent devices.

In the embodiment of the present disclosure, the above first information may be sent through radio resource control (RRC) signaling, and/or medium access control control element (MAC CE) and/or downlink control information (DCI) signaling.

Step 202: performing, by the first node device, measurement and reporting according to the first information.

In the embodiment of the present disclosure, the measurement and reporting includes at least one of beam measurement and reporting and channel state information (CSI) measurement and reporting.

In an optional implementation, the above CSI is a channel quality indicator (CQI), a precoding matrix indicator (PMI), etc. The above beam measurement and reporting is Layer 1 Reference Signal Received Power (L1-RSRP) or Layer 1 Signal to Interference plus Noise Ratio (L1-SINR) reporting.

In the embodiment of the present disclosure, the first node device that performs transmission with the terminal and/or the network side device can perform measurement and reporting according to the first information sent by the network side device, such as performing beam measurement and reporting, thereby obtaining optimal beam information for single-hop link between the first node device and the network side device. Compared with the situation where the network side transmits a beam, the RIS or the relay node receives or transmits the beam for joint training in the two-hop channels, the beam training time can be effectively reduced.

Optionally, the first information includes at least one of first measurement and reporting configuration information, first measurement resource configuration information, and first predefined information.

In the embodiment of the present disclosure, the first node device may be instructed to perform measurement and reporting through at least one of the first measurement and reporting configuration information, the first measurement resource configuration information and the first predefined information. Optionally, in the embodiment of the present disclosure, the first node device may be directly instructed to perform measurement and reporting through a Medium Access Control Control Element (MAC CE) or DCI.

The above first predefined information may be predefined rule information which is information predetermined in the protocol, or command information pre-imported to the first node through the hardware device, etc. If the predefined rule information requires the first node device to periodically report the measurement result, the first node device may periodically report the measurement result according to the first predefined rule information.

Optionally, the above first measurement and reporting configuration information may include, but is not limited to, at least one of the following parameters:

CSI-ReportConfig-CN;
CSI-AperiodicTriggerStateList-CN;
CSI-SemiPersistentOnPUSCH-TriggerStateList-CN.

The above first measurement resource configuration information may include, but is not limited to, at least one of the following parameters:

CSI-ResourceConfig-CN;
NZP-CSI-RS-ResourceSet-CN;
CSI-SSB-ResourceSet-CN;
NZP-CSI-RS-Resource-CN.

In an optional embodiment of the present disclosure, the first information is further used by the first node or terminal to distinguish whether the network side device instructs the first node to perform measurement and reporting or the terminal to perform measurement and reporting, which specifically can be achieved by the following method.

Method 1: RRC signaling is used to instruct the first node to perform measurement and reporting and/or the terminal to report. For example, the terminal is configured to perform beam measurement and reporting or CSI reporting through the RRC parameters CSI-ReportConfig, CSI-AperiodicTriggerStateList or CSI-SemiPersistentOnPUSCH-TriggerStateList. Similarly, the first node device is configured to perform beam measurement and reporting or CSI reporting through high-layer parameters CSI-ReportConfig-CN, CSI-AperiodicTriggerStateList-CN or CSI- SemiPersistentOn-PUSCH-TriggerStateList-CN, etc.

Alternatively, the reporting by the first node device or terminal may be distinguished through CSI resource configuration or CSI resource set or CSI-RS resource configuration. For example, CSI-ResourceConfig, NZP-CSI-RS-ResourceSet, CSI-SSB-ResourceSet, NZP-CSI-RS-Resource, etc. are used to instruct the terminal to perform beam measurement and reporting or CSI measurement and reporting; CSI-ResourceConfig-CN, NZP-CSI -RS-ResourceSet-CN, CSI-SSB-ResourceSet-CN, NZP-CSI-RS-Resource-CN, etc. are used to instruct the first node device to perform beam measurement and reporting or CSI measurement and reporting.

For example, the network side can instruct a reporting node through measurement resource configuration information linked by reporting configuration. For example, when measurement resource linked (or included) by CSI-ReportConfig is configured as CSI-ResourceConfig, it indicates that the terminal is instructed to report; when the linked (or included) measurement resource is configured as CSI-ResourceConfig, it indicates that the first node is instructed to report; when the linked (or included) measurement resource is configured as CSI-ResourceConfig and CSI-Resource-Config-CN, it indicates that the terminal and the first node both are instructed to report.

Alternatively, the same RRC parameter is used to configure the measurement resource or reporting of the first node or terminal. In the measurement resource or reporting configuration, other RRC parameters are used to explicitly indicate that the reporting node is the first node, or terminal, or the first node and terminal, for example,

```
CSI-ReportConfig::=              SEQUENCE {

reportConfigId                          CSI-ReportConfigId,

reportNode        CHOICE {

ControlNode

UE

ControlNode and UE

}

……

}
```

The reported content includes CRI, SSBRI, L1-RSRP, L1-SINR, etc.

Method 2: MAC-CE signaling and/or DCI signaling is used to instruct the first node to perform measurement and reporting and/or the terminal to report.

For example, by using CSI reporting configuration, CSI resource configuration, CSI resource set and other configurations in NR, MAC-CE signaling and/or DCI is used to indicate that this reporting is performed by the first node, or performed by the terminal, or performed by the first node device and the terminal. The indication method is similar to the RRC parameter reportNode directly indicating the reporting node, and the MAC-CE signaling or DCI signaling includes a specific information field, and then the reporting node is indicated by different values (such as 0, 1, 2) of the information field. For example, when the information field indicates 0, it indicates that the terminal performs reporting; when the information field indicates 1, it indicates that the first node performs reporting; when the information field indicates 2, it indicates that both the terminal and the first node perform reporting.

For another example, in aperiodic reporting, MAC-CE signaling activates M trigger states, of which M1 trigger states are used for terminal reporting, M2 trigger states are used for first node reporting, and M3 trigger states are used for both the terminal and the first node reporting. Then, one of the triggering states is indicated through DCI signaling, that is, the triggering state indicated through DCI implicitly indicates which node performs reporting.

In the measurement and reporting indicated or triggered by the network side, the network side can allocate different reporting times for terminal reporting and first node reporting, or allocate different time units or frequency units for terminal or first node reporting and first node forwarding terminal's signal, thereby reducing interference between multiple transmissions or reports.

If the first node device does not have the function of decoding RRC signaling, the network side can communicate with the first node only through physical downlink control channel (PDCCH), physical sidelink control channel (PSCCH), physical downlink shared channel (PDSCH), physical sidelink shared channel (PSSCH), physical uplink control channel (PUCCH), physical uplink shared channel (PUSCH), etc. At this point, the physical channel can be used to indicate the measurement and reporting behavior of the first node in a dynamic signaling manner, or, signaling is not used to indicate the first node to perform reporting (at this point, the control node performs measurement and reporting only according to predefined information).

When using dynamic signaling to instruct the first node to perform measurement and reporting, the configuration information (such as multiple reporting configurations, and/or multiple measurement resource configurations) can be stored in the first control node in advance through hardware, and then the dynamic signaling is used to indicate the first node to use one of the reporting configurations and/or the measurement resource configurations to perform measurement and reporting. Alternatively, multiple reporting configurations and/or multiple measurement resource configurations are predefined in the protocol, and then dynamic signaling is used to instruct the first node to use one of the reporting configurations and/or measurement resource configurations to perform measurement and reporting. The reporting configurations may include time domain characteristics of reporting (periodic, aperiodic or semi-persistent reporting), reporting resources (including period and/or offset, offset from dynamic indication signaling, etc.), reporting parameters (such as CRI, SSBRI, L1-RSRP, L1-SINR, RI, PMI, CQI, etc.); the resource configuration resources include time domain characteristics (periodic, aperiodic or semi-persistent transmission) of a group or more reference signal resources, reference signal resources (including period and/or offset, offset from dynamic indication signaling, etc.), QCL information (such as parameter repetition or repetition-RIS configuration), etc.

When the control node performs measurement and reporting based on predefined information, the reporting configuration and/or measurement resource configuration can be pre-written through hardware, or the reporting configuration and/or measurement resource configuration can be pre-specified in the protocol. The terminal performs measurement and reporting according to the predefined information. The reporting configuration may include reported time domain characteristics (usually periodic reporting) of reporting, reporting resources (including period and/or offset, predefined slot or symbol, etc.), reporting parameter (such as CRI, SSBRI, L1-RSRP, L1-SINR, RI, PMI, CQI, or a combination thereof etc.). The resource configuration resources include time domain characteristics (usually periodic transmission) of a group or multiple measurement reference signals, reference signal resources (including periodic and/or offset, etc.), QCL information (such as parameter repetition or repetition-RIS and other configurations), etc. Specifically, the reporting resources may be uplink transmission resource or PUSCH resource with a period of Xms and an offset of Yms, or (first) available PUSCH resource. The first available PUSCH resource may be a first PUSCH resource, which can be used for PUSCH transmission after a transmission time unit determined according to a pre-defined period and offset, and which can accommodate control measurement and reporting information. The measurement reference signal may be a set of SSB resources or CSI-RS resources with a fixed index, or one or more CSI resource set indexes predetermined in the protocol, or one or more CSI resource set indexes, etc. Similarly, the above method can also be extended to the case where the terminal performs measurement and reporting. In the embodiment of the present disclosure, when receiving the first information, the control node distinguishes which configurations in the first information are sent to the first node device for measurement and reporting and which configurations are sent to the terminal for measurement and reporting. The control node only needs to respond to the measurement report configured by the network side for the first node device.

Optionally, the obtaining, by the first node device, first information, includes:

obtaining first measurement resource configuration information according to a first predefined rule or the first measurement and reporting configuration information.

In this embodiment of the present disclosure, the first measurement and reporting configuration information may include first measurement resource configuration information, so that the first node device can obtain the first measurement resource configuration information based on the first measurement and reporting configuration information. Alternatively, if the first measurement resource in the embodiment of the present disclosure is a predefined measurement resource, the first node device can determine the first measurement resource configuration information according to the corresponding predefined rule.

Optionally, the performing, by the first node device, measurement and reporting according to the first information, includes:

measuring, by the first node device, a first measurement resource corresponding to the first measurement resource configuration information, and reporting a measurement result.

In one embodiment of the present disclosure, when the control node and the RIS are geographically close to each other, it can be considered that the control node and the RIS have the same beam direction, that is, the optimal transmission beams of the network side corresponding to the two are the same. Therefore, the control node can be used instead of RIS to measure and report the optimal beam of the network side. Specific steps are as follows:

Step 1: the network side sending a beam management reference signal through beam sweeping;
Step 2: the control node measures the beam management reference signal sent by the network side and determines an optimal transmitting beam with a better measurement value for the network side;
Step 3: the control node reports the beam measurement result to the network side;
Step 4: the network side uses one or more beams (QCL information of reference signal resource corresponding to CRI or SSBRI) reported by the control node to transmit RIS-related channels/signals and control node-related channels or signals.

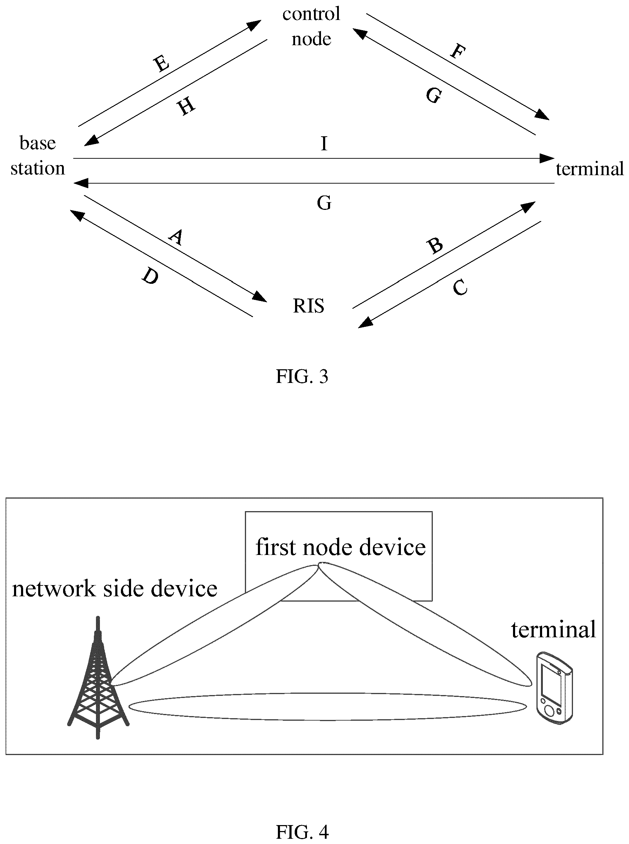

FIG. 3 shows transmission directions of uplink and downlink channels between nodes in the system. The control node and RIS can be connected through wired or other means, which are therefore, not reflected in the figure. In the step 4, the RIS-related channels mainly refer to links A and D; and the control node-related channels mainly refer to links E and H. The network side uses the reporting from the control node to determine the optimal transmission beam of the network side for applying beamforming technology to links A, D, E, and H.

Optionally, the first measurement resource configuration information includes at least one indication parameter. The at least one indication parameter is used to indicate quasi-co-located QCL information of the first measurement resource.

The measuring, by the first node device, the first measurement resource corresponding to the first measurement resource configuration information, includes:

measuring the first measurement resource according to the indication parameter.

Optionally, the performing, by the first node device, measurement and reporting according to the first information, includes:

in the case where the at least one indication parameter is configured as a first value, reporting, by the first node device, first content, where the first content includes at least one of a channel state information reference signal resource indication CRI and a synchronization signal block resource indication SSB RI;

where when the at least one indication parameter is configured as the first value, QCL information of at least two resources in the first measurement resources is different.

Here, at least one indication parameter configured as the first value is used to indicate that QCL information of at least two resources in the first measurement resources is different.

Optionally, the method of this embodiment of the present disclosure further includes:

reporting relevant information of the adjustment matrix of the first node device, where the relevant information of the adjustment matrix includes at least one of codebook and precoding information. The adjustment matrix is used to perform receiving and/or sending processing on the first node device.

Optionally, the first measurement and reporting configuration information further includes: first indication information for indicating the control node to report the relevant information of the adjustment matrix; and

the reporting the relevant information of the adjustment matrix of the first node device, includes:

according to the first indication information, reporting the relevant information of the adjustment matrix.

In an optional embodiment of the present disclosure, the first measurement resource configuration information includes a first indication parameter (repetition-RIS), or the first measurement resource configuration information includes a first indication parameter (repetition-RIS) and a second indication parameter (Repetition).

Specifically, when the measurement and reporting is used for the network side transmitting beam sweeping, the high-layer parameter repetition of the CSI resource set (also including SSB resource set) can be configured as "off"; and when the measurement and reporting is used for the RIS (first node device) receiving beam sweeping, new high-layer parameter can be introduced, such as repetition-RIS, so that the indication of beam sweeping information on the network side and RIS side can be supported at the same time. For example, for the same CSI resource set (or SSB resource set), there can be the following configurations:

Repetition is configured as "off", which means that the network side sends beam sweeping and QCL parameters of each reference signal are different. In this case, the control node needs to report CRI or SSBRI, and the corresponding L1-RSRP or L1-SINR.

Repetition is configured as "on", which means that the network side uses a fixed beam for transmission, and the control node performs receiving beam sweeping, which is suitable for control nodes with strong capabilities and multi-antenna configurations. At this point, the first node device can only report L1-RSRP or L1-SINR. In addition, the first node device can also report receiving beam related information, such as a codeword index in a precoding codebook, which is used by the network side to predict the RIS receiving beamforming matrix.

The repetition is configured as "on" and the repetition-RIS is configured as "off", which means that the network side uses a fixed beam for transmission and RIS performs receiving beam sweeping. At this point, the first node device can report CRI or SSBRI, and the corresponding L1-RSRP or L1-SINR. In addition, the first node device can also report the corresponding RIS adjustment matrix related information to the network side, so that the network side and the first node device have a common understanding of the adjustment matrix used by the RIS.

The repetition is configured as "off", and the repetition-RIS is configured as "off", which means that the network side performs transmitting beam sweeping, and RIS also performs receiving beam sweeping. The first node device can also report CRI or SSBRI, and the corresponding L1-RSRP or L1-SINR. Optionally, the first node device can also report RIS adjustment matrix related information.

The repetition is configured as "on" and the repetition-RIS is configured as "on", which means that both the network side and the RIS use fixed beam for transmission. At this point, this can be used for the phase adjustment matrix sweeping of the RIS. The first node device can also report CRI or SSBRI, and the corresponding L1-RSRP or L1-SINR. Optionally, the control node can also report RIS adjustment matrix related information.

The repetition is configured as "off" and the repetition-RIS is configured as "on", which means that the network side performs transmitting beam sweeping and RIS uses a fixed receiving beam. At this point, the first node device can also report CRI or SSBRI and the corresponding L1-RSRP or L1-SINR. Optionally, the first node device can also report RIS adjustment matrix related information. Compared with the scenario where only repetition is configured as "off", the advantage is that the first node device can also report RIS adjustment matrix related information.

Optionally, when at least one parameter in the repetition or repetition-RIS includes "off", the first node device needs to report CRI or SSBRI information.

Optionally, the method of this embodiment of the present disclosure further includes:

obtaining relevant information of the adjustment matrix indicated by the network side device; where the relevant information of the adjustment matrix includes at least one of codebook and precoding information, and the adjustment matrix is used to perform receiving and/or sending processing on the first node device;

according to the relevant information of the adjustment matrix, determining the adjustment matrix of the first node device.

Optionally, the codebook includes at least one of the following:

codebook about matrix $W_T \emptyset W_R$;
codebook about matrix $W_T W_R \emptyset$;
codebook about matrix $W_R \emptyset$;
codebook about matrix $W_T$;
codebook about matrix $\emptyset$;
codebook about matrix $W_R$;
codebook about matrix $W_T \emptyset$;
codebook about matrix $\emptyset W_R$;
where $W_T$ is used by the first node device to perform transmission processing on the signal sent to the terminal; $W_R$ is used by the first node device to perform receiving process on the signal sent by the network side device, and $\emptyset$ is used for phase control.

Each precoding in each codebook is constant modulus, corresponding to phase adjustment of RIS, and each precoding is a diagonal matrix. The control node can determine a set of codebooks through a predefined manner or instruction from the network side. For example, there are N codebooks in total (each codebook can correspond to a different number of RIS units or RIS subarrays, for example, one codebook corresponds to an adjustment matrix composed of 256 RIS units, one codebook corresponds to an adjustment matrix composed of 512 RIS units; each codebook can also correspond to different functions, for example, as mentioned above, one codebook corresponds to an adjustment matrix of $W_T \emptyset W_R$, and one codebook corresponding to an adjustment matrix of $\emptyset W_R$ structure, etc.). When performing data transmission, the network side can use PDCCH or PSCCH to indicate a modulation codebook index and/or corresponding precoding index used by RIS, to the control node, so that the control node adjusts the RIS, receives and forwards (reflect or project) data to the terminal.

When performing measurement and reporting, one method is that the network side indicates, to the control node, the control codebook and/or corresponding precoding used by the RIS in the measurement and reporting; then the control node adjusts the RIS according to the indication from the network side, and completes subsequent measurement and reporting. Another method is that the control node directly controls the control codebook and/or corresponding precoding used by the RIS in measurement corresponding to each measurement resource (for example, polling or sweeping multiple control codebooks, or multiple codewords within a control codebook), and the adjustment matrix related information is carried in the measurement and reporting, and then the network side determines the optimal codebook and/or optimal precoding for subsequent transmissions.

For example, when the control node reports that the codebook for this measurement is the codebook index corresponding to $W_R$, it means that the measurement and reporting is a beam sweeping for the RIS receiving beam, and the codewords in the codebooks $W_T$ and $\emptyset$ are fixed. When the control node reports that the codebook for this measurement is the codebook index corresponding to $\emptyset W_R$, it means that the measurement and reporting is sweeping for the RIS receiving beam and phase control, and the codewords in the codebook $W_T$ are fixed. In the processing flow, RIS first performs receive beam beamforming, and then performs phase control. When the control node reports that the codebook for this measurement is the codebook index corresponding to codebook $\emptyset W_R$, it means that the measurement and reporting is sweeping for the RIS receiving beam and phase control, and the codewords in the codebook $W_T$ are fixed. In the processing flow, RIS first performs phase control and then performs receiving beam beamforming. When the control node reports that the codebook for this measurement is the codebook index corresponding to codebook $W_T \emptyset W_R$, it means that the measurement and reporting is sweeping of the RIS receiving beam, phase control and transmitting beam. In the processing flow, RIS first performs receiving beam beamforming, then performs phase control, and finally transmits beam beamforming. When the control node reports that the codebook for this measurement is the codebook index corresponding to codebook $W_T W_R \emptyset$, it means that the measurement and reporting is also sweeping of the RIS receiving beam, phase control and transmitting beam, and the difference from the processing flow on the codebook $W_T \emptyset W_R$ is that RIS first performs phase control, and then performs receiving beam beamforming, and finally transmits beamforming. When the control node reports that the codebook for this measurement is the codebook index corresponding to codebook $W_T$, it means that the measurement and reporting is also sweeping for the RIS transmitting beam, and code words in the codebooks $W_R$ and $\emptyset$ are fixed. The value of repetition-RIS can also be expanded to carry information related to the control codebook. For example, the repetition-RIS parameter includes the following possible configuration values:

$W_T \emptyset W_R$, off, means sweeping or polling the codebook of the $W_T \emptyset W_R$ structure during measurement;
$W_T \emptyset W_R$, on, means that fixed precoding is used to measure the codebook of the $W_T \emptyset W_R$ structure during

measurement;

$\varnothing W_R$, off, means sweeping or polling the codebook of the $\varnothing W_R$ structure during measurement;

$\varnothing W_R$, on, means that fixed precoding is used to measure the codebook of the $\varnothing W_R$ structure during measurement.

In addition, the codebooks of $W_T$, $\varnothing$, $W_R$, $W_T\varnothing$ structures can also be configured together with the "on" and "off" values, that is, configured jointly through the parameter repetition-RIS.

In addition, more QCL related parameter values can be introduced. For example, repetition-RIS-Rx means that RIS scans the receiving beam, when its value is 'OFF', it means that the RIS receiving beam adopts sweeping or polling mode; when the value is 'ON', it means that the RIS receiving beam is fixed. For another example, repetition-RIS-Tx means that RIS scans a transmitting beam, when its value is 'OFF', it means that the RIS transmitting beam adopts sweeping or polling mode; when the value is 'ON', it means that the RIS transmitting beam is fixed. The network side can configure at least one parameter value among repetition, repetition-RIS-Rx, and repetition-RIS-Tx, for the control node or terminal, to indicate the QCL parameters for this measurement and to control corresponding measurement behavior of the control node or terminal, for example, using the same or different receive filters for reception.

In case where the RIS precoding codebook is configured by the network side, or the control node reports the precoding codebook, repetition-RIS configured as "on" means that RIS uses the same precoding for CSI-RS resources or SSB in a CSI resource set (or SSB resource set). The repetition-RIS configured as 'off' means that RIS uses different precoding for CSI-RS resources or SSB in a CSI resource set (or SSB resource set). This configuration method is applicable to the control nodes or the terminal.

As shown in FIG. 4, a signal sent by the network side is injected into the RIS at a certain angle, and the RIS emits the signal at another angle. It is assumed that the RIS array has M rows and N columns, that is, there are M×N RIS units in total, the adjustment matrix of the RIS array can be written in the following form:

$$W = W_T \varnothing W_R$$

where $W_R$ represents reception beamforming of RIS on a signal sent from the network side; $W_T$ represents beamforming of RIS on transmitting beam of the terminal; and $\varnothing$ represents a phase adjustment matrix to compensate for path loss and other effects.

When RIS is only used for receiving signal beamforming, the adjustment matrix of the RIS can be controlled as $W = W_R$, that is, $\varnothing = I$, $W_T = I$, where I represents an identity matrix.

When RIS is only used for sending signal beamforming, the adjustment matrix of the RIS can be controlled as $W = W_T$, that is, $\varnothing = I$, $W_R = I$.

When RIS is only used for phase control, the adjustment matrix of the RIS can be controlled as $W = \varnothing$, that is, $W_T = I$, $W_R = I$.

Similarly, when RIS is used for both receiving signal beamforming and phase control, $W = \varnothing W_R$, $W_T = I$.

When RIS is used for both sending signal beamforming and phase control, $W = W_T\varnothing$, $W_T = I$.

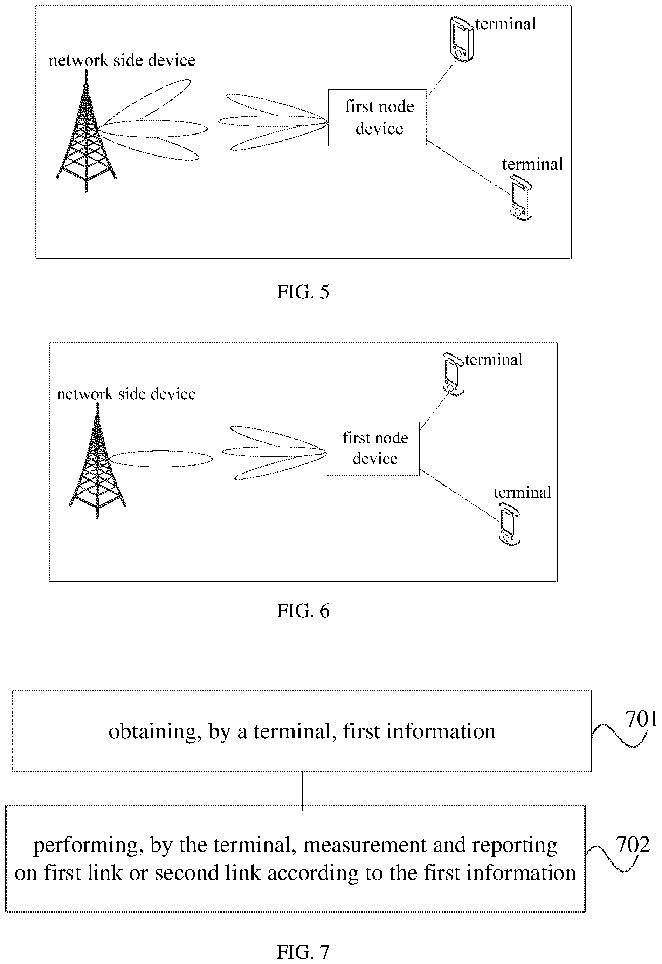

An appropriate beamforming matrix can be selected for RIS through beam sweeping. FIG. 5 and FIG. 6 show two schematic diagrams of the control node assisting RIS in receiving beam sweeping.

Similarly, the adjustment matrix of the RIS array can be written in the following form:

$$W = W_T W_R \varnothing$$

Which is similar to the case where the adjustment matrix structure is $W = W_T\varnothing W_R$, except that execution order of receive beamforming, transmit beamforming and phase control is different.

In FIG. 5, beam sweeping is performed on the transmitting beam of the network side and the receiving beam of the RIS at the same time. In FIG. 6, the transmitting beam of the network side is fixed (for example, the transmitting beam of the network side has been determined through the implementation 1 or other methods). At this point, the specific steps for the control node to assist RIS in receiving beam sweeping (that is, to determine an optimal receiving beam of RIS, or to determine $W_R$) are as follows:

Step 1: the network side sends a set of beam management reference signals (sent by beam sweeping or fixed beam, which is not limited in this embodiment). The set of beam management reference signals may be sent in a time division multiplexing manner, or sent in a frequency division multiplexing manner.

Step 2: RIS receives and reflects, transmits or forwards each beam management reference signal. The adjustment matrix of RIS is W. When forwarding (reflecting or refracting) each beam management reference signal, $W_R$ is different, that is, performing receiving beam sweeping, $W_T$ and $\varnothing$ are fixed, which, for example, may be fixed to an identity matrix; alternatively, the adjustment matrix of RIS is $W = \varnothing W_R$, when forwarding (reflecting or refracting) each beam management reference signal, $W_R$ is different, that is, performing receiving beam sweeping, Ø is fixed; or, the adjustment matrix of RIS is $W_R$, when forwarding (reflecting or refracting) each beam management reference signal, $W_R$ is different, that is, performing receiving beam sweeping.

Step 3: the control node measures the signal reflected, transmitted or forwarded by the RIS, and determines the RIS receiving beam with better measurement value.

Step 4: the control node reports the beam measurement result to the network side.

Step 5: the network side determines the RIS receiving beamforming matrix based on the measurement result, and adjusts the RIS adjustment matrix through the control node.

In the embodiment of the present disclosure, the reason for using the control node instead of terminal as an observation point to measure signals reflected or transmitted by RIS is that: at this point, the network side has not yet mastered the channel information between the network side and the RIS, and does not have channel information between the terminal and the terminal; at this point, the adjustment matrix configuration is not optimized for the channel from RIS to the terminal, such as Ø = I, $W_T$ = I; in this case, the terminal may not receive the signal reflected or transmitted by the RIS; on the other hand, the parameters $W_T$ and $W_R$ in the adjustment matrix are not determined, which will increase the measurement and reporting burden on the terminal; and determination process of the RIS receiving beamforming matrix is only related to the channel from the network side to the RIS, and has nothing to do with the terminal-related link. Therefore, it is more appropriate for the control node to assist RIS in measuring.

The premise that this solution can work is that the control node needs to be deployed within the reflection or projection range of the RIS. For example, the control node can be deployed in front of the RIS array, that is, as long as the control node is not deployed behind the RIS array. The control node can be configured with only one antenna, without complex beam beamforming operations, and the measurement process is relatively simple.

For transmissions involving two-hop channels (gNB to RIS, RIS to UE), gNB, RIS and UE may all be configured with multiple antennas, and thus there are at most four beam sweeping requirements: gNB transmitting beam sweeping, RIS receiving beam sweeping, RIS transmitting beam sweeping, terminal receiving beam sweeping. If beam sets corresponding to each of the above beams are K1, K2, K3 and K4 respectively, when jointly performing beam measurements on the two sets of channels, sweeping process of at most K1*K2*K3*K4 beam combinations need to be tried (that is, a beam is selected from each beam set and is combined with a beam selected from other beam sets), this will increase the complexity or delay of beam sweeping in the system. Through the method of the present disclosure, it is possible to achieve joint sweeping of one beam or one beam set by the control node or terminal, thereby reducing the delay or complexity of beam sweeping. However, compared with the scheme of joint beam sweeping of four beam sets, the selected beam combination may not be optimal, this solution provides a better beam sweeping method that is easy to implement in engineering. This method is still applicable when there are channels with more than two hops, such as three hops or four hops. At this point, more QCL parameter related parameter configurations can be introduced, such as repetition-RIS1, repetition-RIS2, repetition-RIS3, etc., which is used by the network side to indicate the QCL parameters of each hop channel.

Optionally, performing, by the first node device, measurement and reporting based on the first information, includes:

determining a first reporting resource according to an indication of the network side device or a second predefined rule; performing the measurement report on the first reporting resource.

The first reporting resource has been described in the above description and will not be described again here.

In this embodiment of the present disclosure, the first reporting resource may be a reporting resource indicated by the network side through a physical downlink control channel (PDCCH) or a physical sidelink control channel (PSCCH), such as frequency domain resource allocation domain, time domain resource allocation domain, and other scheduling information in control information. It can also be reported on predefined resources (that is, the first reporting resource is determined according to the second predefined rule), for example, beam or CSI reporting is performed on predefined time-frequency resources every Xms. The predefined time-frequency resource can be N RBs (for example, N RBs with a specified offset relative to the common RB 0) on a 1ms (or slot) with a period of Xms (or slot) and an offset of 1-(X-1).

The reported content includes channel state information reference signal resource indicator (CSI-RS Resource Indicator, CRI), synchronization signal block resource indicator (SSBRI), layer 1 reference signal received power (L1-RSRP), Layer 1 Signal to Interference plus Noise Ratio (L1-SINR), etc.

In the embodiment of the present disclosure, the first node device that perform transmission with the terminal and/or the network side device can perform measurement and reporting according to the first information sent by the network side device, such as beam measurement and reporting, thereby obtaining optimal beam information for single-hop links between the first node device and the network side device.

As shown in FIG. 7, one embodiment of the present disclosure further provides a measurement and reporting method, including:

Step 701: obtaining, by a terminal, first information; where a first link is a transmission link between a network side device and the terminal, and a second link is a transmission link between the terminal and a first node device, the first node device is used for transmission with the terminal and/or the network side device.

In this step, the terminal obtains the above first information from the network side device.

Optionally, the above first link includes a channel between the base station and the terminal, and may also include an equivalent channel between the base station, the first node device or a second node device, and UE.

Step 702: performing, by the terminal, measurement and reporting on the first link or the second link according to the first information.

In the embodiment of the present disclosure, according to the first information sent by the network side device, the terminal can perform measurement and reporting on the transmission link between the network side device and the terminal and/or the transmission link between the terminal and the first node device, thereby obtaining optimal beam information of a single-hop link (first link and/or second link) in the RIS system or relay system.

Optionally, the first information includes at least one of second measurement and reporting configuration information, second measurement resource configuration information, and second predefined information.

Optionally, the above second measurement and reporting configuration information may include but is not limited to at least one of the following parameters:

CSI-ReportConfig;
CSI-AperiodicTriggerStateList;
CSI-SemiPersistentOnPUSCH-TriggerStateList.

The above second measurement resource configuration information may include but is not limited to at least one of the following parameters:

CSI-ResourceConfig;
NZP-CSI-RS-ResourceSet;
CSI-SSB-ResourceSet;
NZP-CSI-RS-Resource.

The above second predefined information may be predefined rule information. If the predefined rule information requires the terminal to periodically report the measurement result, the terminal may periodically report the measurement result according to the second predefined rule information.

Optionally, the obtaining, by the terminal, the first information, further includes:

obtaining second measurement resource configuration information according to a third predefined rule or the second measurement and reporting configuration information.

In this embodiment of the present disclosure, the second measurement and reporting configuration information may include second measurement resource configuration information, so that the terminal can obtain the second measurement resource configuration information based on the second measurement and reporting configuration information. Alternatively, if the second measurement resource in the embodiment of the present disclosure is a predefined measurement resource, the terminal can determine the second measurement resource configuration information according to the corresponding predefined rule.

Optionally, the second measurement resource configuration information includes at least one indication parameter, and the at least one indication parameter is used to indicate QCL information of the second measurement resource corresponding to the second measurement resource configuration information.

The performing, by the terminal, beam measurement and reporting on the first link or the second link according to the first information, includes:

measuring, by the terminal, the second measurement resource for the first link or the second link according to the indication parameter.

Optionally, the method of this embodiment of the present disclosure further includes:

in case where the at least one indication parameter is configured as a first value, reporting, by the terminal, first content, where the first content includes at least one of CRI and SSB RI;
wherein when the at least one indication parameter is configured as the first value, QCL information of at least two resources in the second measurement resources is different. For example, the first value above is "off".

Optionally, the measurement and reporting configuration information also includes: reception filter information of the terminal.

In an optional embodiment of the present disclosure, after the link between the network side and the control node has completed beam sweeping, beam sweeping can also be performed on the link between the RIS and the terminal. The specific steps are as follows.

Step 1: the network side sends a set of beam management reference signals (sent by beam sweeping or fixed beam, which is not limited in this embodiment). The set of beam management reference signals may be sent in a time division multiplexing manner, or sent in a frequency division multiplexing manner.

Step 2: RIS receives and reflects or transmits each beam management reference signal. The adjustment matrix of RIS is W. When forwarding (reflecting or refracting) each beam management reference signal, $W_T$ is different, that is, performing transmitting beam sweeping, $W_R$ and Ø are fixed, which for example, may be fixed to an identity matrix; alternatively, the adjustment matrix of RIS is $W = W_T Ø$, when forwarding (reflecting or refracting) each beam management reference signal, $W_T$ is different, that is, performing transmitting beam sweeping, Ø is fixed; or, the adjustment matrix of RIS is $W = W_T$, when forwarding (reflecting or refracting) each beam management reference signal, $W_T$ is different, that is, performing transmitting beam sweeping.

Step 3: the terminal measures the signal reflected, transmitted or forwarded by the RIS, and determines the RIS receiving beam with better measurement value.

Step 4: the terminal reports the beam measurement result to the network side.

Step 5: the network side determines the RIS transmitting beamforming matrix based on the measurement result, and adjusts the RIS adjustment matrix through the control node.

It is to be noted that the control node's beam measurement and reporting process, measurement reference signal configuration, adjustment matrix configuration and reporting method are still applicable to this embodiment. For example, the configuration of parameters repetition and repetition-RIS is applicable to both the control node and the UE.

In addition, the terminal can also distinguish which link a measurement and reporting is for. For example, if the high-layer parameter in the CSI resource set or SSB set in CSI resource configuration associated with a reporting configuration includes the repetition parameter, it means that this measurement and reporting is for the link from the network side to the terminal. If the high-layer parameter includes repetition and repetition-RIS, it means that this measurement and reporting is for the synthetic link or joint link from the network side to the RIS to the terminal, or the joint beam sweeping of at least two beams. If the high-layer parameter includes repetition-RIS, it means that this measurement and reporting is for the link from RIS to the terminal.

Measurement reference signal configuration:

For example, for the same CSI resource set (or SSB resource set), there can be the following configurations: Repetition is configured as "off", which means that the network side sends beam sweeping and QCL parameters of each reference signal are different.

Repetition is configured as "on", which means that the network side uses a fixed beam for transmission, and the terminal performs receiving beam sweeping.

The repetition is configured as "on" and the repetition-RIS is configured as "off", which means that the network side uses a fixed beam for transmission and RIS performs receiving beam or transmitting beam sweeping or adjustment matrix sweeping.

The repetition is configured as "off", and the repetition-RIS is configured as "off", which means that the network side performs transmitting beam sweeping, and RIS performs receiving beam or transmitting beam sweeping or adjustment matrix sweeping.

The repetition is configured as "on" and the repetition-RIS is configured as "on", which means that both the network side and the RIS use fixed beam or adjustment matrix for transmission. At this point, this can be used for terminal receiving beam sweeping.

The repetition is configured as "off" and the repetition-RIS is configured as "on", which means that the network side performs transmitting beam sweeping and RIS uses a fixed receiving beam or transmitting beam or adjustment matrix.

Repetition-RIS is configured as "on", which means that RIS uses fixed receiving beams or transmitting beams or adjustment matrix. At this point, this can be used for terminal receiving beam sweeping.

Repetition-RIS is configured as "off", which means that RIS performs receiving beam or transmitting beam or adjustment matrix sweeping. At this point, this can be used for terminal receiving beam sweeping.

When only the parameter repetition-RIS is configured, the CSI resource set or SSB set can be sent by the network side, or can also be sent by the control node, which is not limited in the present disclosure.

When at least one parameter in repetition or repetition-RIS includes "off", the terminal needs to report CRI or SSBRI information. If both parameters are configured as "on", there is no need to report CRI or SSBRI. However, regardless of configuration of repetition or repetition-RIS, L1-RSRP or L1-SINR parameters need to be reported.

Additional parameters can also be configured to indicate whether the terminal performs receiving beam sweeping. For example, when repetition is configured as "off" or repetition-RIS is configured as "off", the parameter rxbeamsweeping can also be configured for the terminal, that is, the network side or RIS and the terminal perform transmitting or receiving beam sweeping at the same time. That is, indicating the terminal receiving filter information, i.e., in a measurement and reporting, whether the terminal needs to use the same or different filters to receive all CSI-RS resources or SSB resources in a CSI resource set or SSB set. The configuration of rxbeamsweeping can also include "on" or "off", where "on" means that the receiving filter remains unchanged when measuring a CSI resource set, that is, the same receiving filter is used to measure all CSI-RS resources in a CSI resource set; "off" indicates that a receiving end uses different receiving filters to measure different CSI-RS resources in a CSI resource set. The receiving end includes a control node or terminal.

It is to be noted that, since the problem-solving principle of the terminal in the embodiment of the present disclosure is similar to that of the first node device, the implementation of the terminal can be referred to the implementation of the measurement and reporting method on the first receiving device side, and repeated points will not be described again.

In the embodiment of the present disclosure, according to the first information sent by the network side device, the terminal can perform measurement and reporting for the transmission link between the network side device and the terminal and/or the transmission link between the terminal and the first node device, thereby obtaining optimal beam information of a single-hop link (first link and/or second link) in the RIS system or relay system.

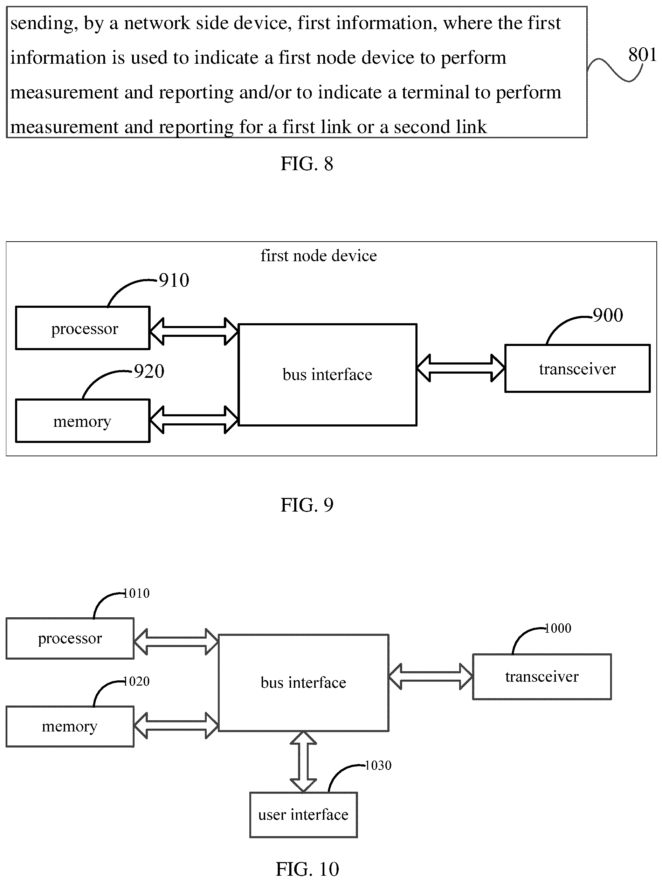

As shown in FIG. 8, one embodiment of the present disclosure further provides a measurement and reporting method, including:

Step 801: sending, by a network side device, first information, where the first information is used to indicate a first node device to perform measurement and reporting and/or to indicate a terminal to perform measurement and reporting for a first link or a second link, where the first node device is used to perform transmission with the terminal and/or the network side device, the first link is a transmission link between the network side device and the terminal, and the second link is a transmission link between the terminal and the first node device.

The above network side device may specifically be a base station.

Optionally, the first information includes at least one of the following:

first measurement and reporting configuration information, first measurement resource configuration information and/or first predefined information;

second measurement and reporting configuration information, second measurement resource configuration information and/or second predefined information.

Specific descriptions of the first information may refer to the descriptions in the method embodiments on the first node device side or the terminal side, which will not be described again here.

Optionally, the first measurement resource configuration information includes at least one indication parameter. The at least one indication parameter is used to indicate QCL information of a first measurement resource corresponding to the first measurement resource configuration information.

Alternatively, the second measurement resource configuration information includes at least one indication parameter, and the at least one indication parameter is used to indicate QCL information of a second measurement resource corresponding to the second measurement resource configuration information.

Specific description of the indication parameter may refer to the description in the above method embodiment on the first node device side, which will not be described again here.

In the embodiment of the present disclosure, the network side device sends first information, the first information is used to indicate the first node device to perform measurement and reporting and/or to indicate the terminal to perform measurement and reporting for the first link or the second link, thereby obtaining optimal beam information of a single-hop link (first link, second link, the link between the first node device and the network side device) in the RIS system or relay system.

In addition, the network side device can also obtain the optimal beam information of the synthetic link (such as the link from the network side to the RIS to the terminal) based on the optimal beam information of the above single-hop link.

As shown in FIG. 9, one embodiment of the present disclosure further provides a measurement and reporting device, which is applied to a first node device and includes a memory 920, a transceiver 900, and a processor 910.

The memory 920 is used to store a computer program. The transceiver 900 is used to send and receive data under the control of the processor. The processor 910 is used to read the computer program in the memory and perform the following operations:

obtaining first information, where the first node device is used for transmission with a terminal and/or a network side device;

performing measurement and reporting according to the first information.

Optionally, the first information includes at least one of first measurement and reporting configuration information, first measurement resource configuration information, and first predefined information.

Optionally, the processor 910 is further used to read the computer program and perform the following operations:

reporting at least one of the following measurement processes:
transmitting beam sweeping process of the network side device;
receiving beam sweeping process of a second node device;
transmitting beam sweeping process of the second node device;
adjustment matrix training process of the second node device.

The second node device is used to forward a signal sent by the network side device for the terminal, or used to forward a signal sent by the terminal for the network side device.

Optionally, the processor 910 is further used to read the computer program and perform the following operations: obtaining first measurement resource configuration information according to a first predefined rule or the first measurement and reporting configuration information.

Optionally, the processor 910 is further used to read the computer program and perform the following operations: measuring a first measurement resource corresponding to the first measurement resource configuration information, and reporting a measurement result.

Optionally, the first measurement resource configuration information includes at least one indication parameter. The at least one indication parameter is used to indicate quasi-co-located QCL information of the first measurement resource.

The measuring, by the first node device, the first measurement resource corresponding to the first measurement resource configuration information, includes:
measuring the first measurement resource according to the indication parameter.

Optionally, the processor 910 is further used to read the computer program and perform the following operations:

in the case where the at least one indication parameter is configured as a first value, reporting first content, where the first content includes at least one of a channel state information reference signal resource indication CRI and a synchronization signal block resource indication SSB RI;
where when the at least one indication parameter is configured as the first value, QCL information of at least two resources in the first measurement resources is different.

Optionally, the processor 910 is further used to read the computer program and perform the following operations:

determining a first reporting resource according to an indication of the network side device or a second predefined rule;
performing the measurement report on the first reporting resource.

Optionally, the processor 910 is further used to read the computer program and perform the following operations: reporting relevant information of an adjustment matrix of the first node device, where the relevant information of the adjustment matrix includes at least one of codebook and precoding information. The adjustment matrix is used to perform receiving and/or sending processing on the first node device.

Optionally, the first measurement and reporting configuration information further includes: first indication information for indicating the control node to report the relevant information of the adjustment matrix; and
optionally, the processor 910 is further used to read the computer program and perform the following operations:
according to the first indication information, reporting the relevant information of the adjustment matrix.

Optionally, the processor 910 is further used to read the computer program and perform the following operations:

obtaining relevant information of the adjustment matrix indicated by the network side device; where the relevant information of the adjustment matrix includes at least one of codebook and precoding information, and the adjustment matrix is used to perform receiving and/or sending processing on the first node device;
according to the relevant information of the adjustment matrix, determining the adjustment matrix of the first node device.

Optionally, the codebook includes at least one of the following:

codebook about matrix $W_T \emptyset W_R$;
codebook about matrix $W_T W_R \emptyset$;
codebook about matrix $W_R \emptyset$;

codebook about matrix $W_T$;
codebook about matrix $\emptyset$;
codebook about matrix $W_R$;
codebook about matrix $W_T\emptyset$;
codebook about matrix $\emptyset W_R$;
where $W_T$ is used by the first node device to perform transmission processing on the signal sent to the terminal; $W_R$ is used by the first node device to perform receiving process on the signal sent by the network side device, and $\emptyset$ is used for phase control.

Optionally, the first node device includes a control node, the control node is used to adjust or control the second node device. The second node device includes an RIS node or a relay node. In FIG. 9, a bus architecture may include any number of interconnected bus and bridge. Specifically, various circuits of one or more processors, which are represented by the processor 910, and one or more memories, which are represented by the memory 920, are linked together. The bus architecture may link various other circuits, such as a peripheral device, voltage regulator and a power management circuit together. These features are well known in this field; therefore, this disclosure does not make further description on these features. The bus interface provides an interface. The transceiver 900 may be multiple elements, including a transmitter and a receiver and provide units, which communicate with other devices on the transmission medium. The transmission medium includes radio channels, wired channels, optical cables, etc. The processor 910 is responsible for managing the bus architecture and the normal processing. The memory 920 may be used to store data used by the processor 910 for performing operations.

The processor 910 may be a central processing unit (CPU), an application specific integrated circuit (ASIC), a field-programmable gate array (FPGA) or a complex programmable logic device (CPLD). The processor may also adopt multi-core architecture.

It is to be noted here that the above device provided in the embodiment of the present disclosure can implement all the method steps of the above measurement and reporting method embodiment on the first node device side, and can achieve the same technical effect. The parts and beneficial effects of this embodiment that are the same as those in the method embodiment will not be described in detail here.

As shown in FIG. 10, one embodiment of the present disclosure further provides a measurement and reporting device, which is applied to a terminal and includes a memory 1020, a transceiver 1000, and a processor 1010.

The memory 1020 is used to store a computer program. The transceiver 1000 is used to send and receive data under the control of the processor 1010. The processor 1010 is used to read the computer program in the memory 1020 and perform the following operations:

obtaining first information; where a first link is a transmission link between a network side device and the terminal, and a second link is a transmission link between the terminal and a first node device, the first node device is used for transmission with the terminal and/or the network side device;
performing measurement and reporting on the first link or the second link according to the first information.

Optionally, the first information includes at least one of second measurement and reporting configuration information, second measurement resource configuration information, and second predefined information.

The processor 1010 is used to read the computer program and perform the following operations:
obtaining second measurement resource configuration information according to a third predefined rule or the second measurement and reporting configuration information.

Optionally, the second measurement resource configuration information includes at least one indication parameter, and the at least one indication parameter is used to indicate QCL information of the second measurement resource corresponding to the second measurement resource configuration information.

The processor 1010 is used to read the computer program and perform the following operations:
measuring the second measurement resource for the first link or the second link according to the indication parameter.

The processor 1010 is used to read the computer program and perform the following operations:
in case where the at least one indication parameter is configured as a first value, reporting first content, where the first content includes at least one of CRI and SSB RI.

Optionally, the measurement and reporting configuration information also includes: reception filter information of the terminal.

In FIG. 10, a bus architecture may include any number of interconnected bus and bridge. Specifically, various circuits of one or more processors, which are represented by the processor 1010, and one or more memories, which are represented by the memory 1020, are linked together. The bus architecture may link various other circuits, such as a peripheral device, voltage regulator and a power management circuit together. These features are well known in this field; therefore, this disclosure does not make further description on these features. The bus interface provides an interface. The transceiver 1000 may be multiple elements, including a transmitter and a receiver and provide units, which communicate with other devices on the transmission medium. The transmission medium includes radio channels, wired channels, optical cables, etc. For different UEs, a user interface 1030 may be an interface that can be connected to external or internal devices. The connected devices include but are not limited to a small keyboard, a display, a speaker, a microphone, a joystick, etc.

The processor 1010 is responsible for managing the bus architecture and the normal processing. The memory 1020 may be used to store data used by the processor 1010 for performing operations.

Optionally, the processor 1010 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

It is to be noted here that the above device provided in the embodiment of the present disclosure can implement all the method steps implemented in the above measurement and reporting method embodiment, and can achieve the same technical effect. The parts and beneficial effects of this embodiment that are the same as those in the method embodiment will not be described in detail here.

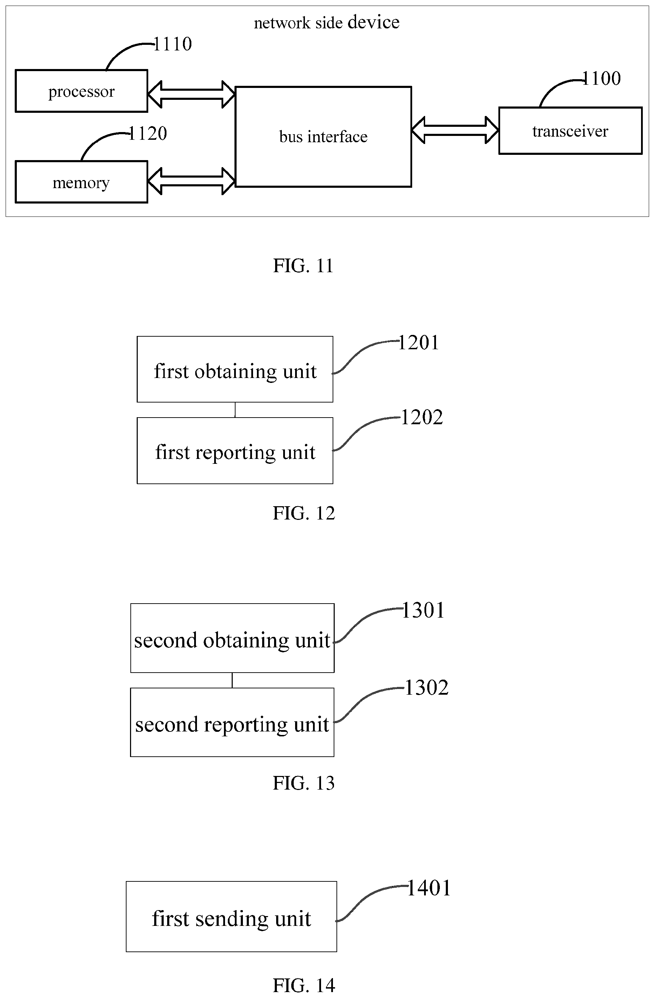

As shown in FIG. 11, one embodiment of the present disclosure further provides a measurement and reporting device, which is applied to network side device (such as a base station), and includes a memory 1120, a transceiver 1100, and a processor 1110.

The memory 1120 is used to store a computer program. The transceiver 1100 is used to send and receive data under the control of the processor 1110. The processor 1110 is used to read the computer program in the memory 1120 and perform the following operations:

sending first information, where the first information is used to indicate a first node device to perform measurement and reporting and/or to indicate a terminal to perform measurement and reporting for a first link or a second link, where the first node device is used to perform transmission with the terminal and/or the network side device, the first link is a transmission link between the network side device and the terminal, and the second link is a transmission link between the terminal and the first node device.

Optionally, the first information includes at least one of the following:

first measurement and reporting configuration information, first measurement resource configuration information and/or first predefined information;
second measurement and reporting configuration information, second measurement resource configuration information and/or second predefined information.

Optionally, the first measurement resource configuration information includes at least one indication parameter. The at least one indication parameter is used to indicate QCL information of a first measurement resource corresponding to the first measurement resource configuration information.

Alternatively, the second measurement resource configuration information includes at least one indication parameter, and the at least one indication parameter is used to indicate QCL information of a second measurement resource corresponding to the second measurement resource configuration information.

In FIG. 11, a bus architecture may include any number of interconnected bus and bridge. Specifically, various circuits of one or more processors, which are represented by the processor 1110, and one or more memories, which are represented by the memory 1120, are linked together. The bus architecture may link various other circuits, such as a peripheral device, voltage regulator and a power management circuit together. These features are well known in this field; therefore, this disclosure does not make further description on these features. The bus interface provides an interface. The transceiver 1100 may be multiple elements, including a transmitter and a receiver and provide units, which communicate with other devices on the transmission medium. The transmission medium includes radio channels, wired channels, optical cables, etc. The processor 1110 is responsible for managing the bus architecture and the normal processing. The memory 1120 may be used to store data used by the processor 1110 for performing operations.

The processor 1110 may be a central processing unit (CPU), an application specific integrated circuit (ASIC), a field-programmable gate array (FPGA) or a complex programmable logic device (CPLD). The processor may also adopt multi-core architecture.

It is to be noted here that the above device provided in the embodiment of the present disclosure can implement all the method steps of the above measurement and reporting method embodiment on the terminal side, and can achieve the same technical effect. The parts and beneficial effects of this embodiment that are the same as those in the method embodiment will not be described in detail here.

As shown in FIG. 12, one embodiment of the present disclosure further provides a measurement and reporting device, which is applied to a first node device and includes:

a first obtaining unit 1201 used to obtain first information, where the first node device is used for transmission with a terminal and/or a network side device;
a first reporting unit 1202 used to perform measurement and reporting according to the first information.

Optionally, the first information includes at least one of first measurement and reporting configuration information, first measurement resource configuration information, and first predefined information.

Optionally, the first reporting unit is further used to report at least one of the following measurement processes:

transmitting beam sweeping process of the network side device;
receiving beam sweeping process of a second node device;
transmitting beam sweeping process of the second node device;
adjustment matrix training process of the second node device.

The second node device is used to forward a signal sent by the network side device for the terminal, or used to forward a signal sent by the terminal for the network side device.

Optionally, in the device of this embodiment of the present disclosure, the first obtaining unit 1201 is used to obtain first measurement resource configuration information according to a first predefined rule or the first measurement and reporting configuration information.

Optionally, the first reporting unit is used to measure a first measurement resource corresponding to the first measurement resource configuration information, and report a measurement result.

Optionally, the first measurement resource configuration information includes at least one indication parameter. The at least one indication parameter is used to indicate quasi-co-located QCL information of the first measurement resource.

The first reporting unit is used to measure the first measurement resource according to the indication parameter.

Optionally, the first reporting unit is used to, in the case where the at least one indication parameter is configured as a first value, report first content, where the first content includes at least one of a channel state information reference signal resource indication CRI and a synchronization signal block resource indication SSB RI;
where when the at least one indication parameter is configured as the first value, QCL information of at least two resources in the first measurement resources is different.

Optionally, the first reporting unit includes:

a first determination subunit used to determine a first reporting resource according to an indication of the network side device or a second predefined rule;
a first reporting subunit used to perform the measurement report on the first reporting resource.

Optionally, the device of this embodiment of the present disclosure further includes:
a third reporting unit used to report relevant information of an adjustment matrix of the first node device, where the relevant information of the adjustment matrix includes at least one of codebook and precoding information. The adjustment matrix is used to perform receiving and/or sending processing on the first node device.

Optionally, the first measurement and reporting configuration information further includes: first indication information for indicating the control node to report the relevant information of the adjustment matrix; and
the third reporting unit is used to report the relevant information of the adjustment matrix according to the first indication information.

Optionally, the device of this embodiment of the present disclosure further includes:

a third obtaining unit used to obtain relevant information of the adjustment matrix indicated by the network side device;
where the relevant information of the adjustment matrix includes at least one of codebook and precoding information, and the adjustment matrix is used to perform receiving and/or sending processing on the first node device;
a first determining unit used to determine the adjustment matrix of the first node device according to the relevant information of the adjustment matrix.

Optionally, the codebook includes at least one of the following:

codebook about matrix $W_T \emptyset W_R$;
codebook about matrix $W_T W_R \emptyset$;
codebook about matrix $W_R \emptyset$;

codebook about matrix $W_T$;
codebook about matrix Ø;
codebook about matrix $W_R$;
codebook about matrix $W_T$Ø;
codebook about matrix Ø$W_R$;
where $W_T$ is used by the first node device to perform transmission processing on the signal sent to the terminal; $W_R$ is used by the first node device to perform receiving process on the signal sent by the network side device, and Ø is used for phase control.

Optionally, the first node device includes a control node, the control node is used to adjust or control the second node device. The second node device includes an RIS node or a relay node. It is to be noted here that the above device provided in the embodiment of the present disclosure can implement all the method steps of the above measurement and reporting method embodiment on the first node device side, and can achieve the same technical effect. The parts and beneficial effects of this embodiment that are the same as those in the method embodiment will not be described in detail here.

As shown in FIG. 13, one embodiment of the present disclosure further provides a measurement and reporting device, which is applied to a terminal and includes:

a second obtaining unit 1301 used to obtain first information; where a first link is a transmission link between a network side device and the terminal, and a second link is a transmission link between the terminal and a first node device, the first node device is used for transmission with the terminal and/or the network side device;
a second reporting unit 1302 used to perform measurement and reporting on the first link or the second link according to the first information.

Optionally, the first information includes at least one of second measurement and reporting configuration information, second measurement resource configuration information, and second predefined information.

Optionally, in the device of this embodiment of the present disclosure, the second obtaining unit is used to obtain second measurement resource configuration information according to a third predefined rule or the second measurement and reporting configuration information.

Optionally, the second measurement resource configuration information includes at least one indication parameter, and the at least one indication parameter is used to indicate QCL information of the second measurement resource corresponding to the second measurement resource configuration information.

The second reporting unit is used to measure the second measurement resource for the first link or the second link according to the indication parameter.

Optionally, in the device of this embodiment of the present disclosure, the second reporting unit is used to, in case where the at least one indication parameter is configured as a first value, report first content, where the first content includes at least one of CRI and SSB RI.

When the at least one indication parameter is configured as the first value, QCL information of at least two resources in the second measurement resources is different.

Optionally, the measurement and reporting configuration information also includes: reception filter information of the terminal.

It is to be noted here that the above device provided in the embodiment of the present disclosure can implement all the method steps implemented in the above measurement and reporting method embodiment on the terminal side, and can achieve the same technical effect. The parts and beneficial effects of this embodiment that are the same as those in the method embodiment will not be described in detail here.

As shown in Figure 14, one embodiment of the present disclosure further provides a measurement and reporting device, which is applied to a network side device and includes:
a first sending unit 1401 used to send first information, where the first information is used to indicate a first node device to perform measurement and reporting and/or to indicate a terminal to perform measurement and reporting for a first link or a second link, where the first node device is used to perform transmission with the terminal and/or the network side device, the first link is a transmission link between the network side device and the terminal, and the second link is a transmission link between the terminal and the first node device.

Optionally, the first information includes at least one of the following:

first measurement and reporting configuration information, first measurement resource configuration information and/or first predefined information;
second measurement and reporting configuration information, second measurement resource configuration information and/or second predefined information.

Optionally, the first measurement resource configuration information includes at least one indication parameter. The at least one indication parameter is used to indicate QCL information of a first measurement resource corresponding to the first measurement resource configuration information.

Alternatively, the second measurement resource configuration information includes at least one indication parameter, and the at least one indication parameter is used to indicate QCL information of a second measurement resource corresponding to the second measurement resource configuration information.

It is to be noted here that the above device provided in the embodiment of the present disclosure can implement all the method steps of the above measurement and reporting method embodiment on the terminal side, and can achieve the same technical effect. The parts and beneficial effects of this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

In some embodiments of the present disclosure, a processor-readable storage medium is provided and includes a computer program stored thereon; where the computer program is used to cause a processor to perform the following steps:

obtaining first information, where the first node device is used for transmission with a terminal and/or a network side device; performing measurement and reporting according to the first information; where the first information includes at least one of first measurement and reporting configuration information, first measurement resource configuration information, and first predefined information;

or, obtaining first information; where a first link is a transmission link between a network side device and the terminal, and a second link is a transmission link between the terminal and a first node device, the first node device is used for transmission with the terminal and/or the network side device; performing measurement and reporting on the first link or the second link according to the first information; where the first information includes at least one of second measurement and reporting configuration information, second measurement resource configuration information, and second predefined information;

or, sending first information, where the first information is used to indicate a first node device to perform measurement and reporting and/or to indicate a terminal to perform measurement and reporting for a first link or a second link, where the first node device is used to perform transmission with the terminal and/or the network side device, the first link is a transmission link between the network side device and the terminal, and the second link is a transmission link between the terminal and the first node device.

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device (network side device) involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A measurement and reporting method, comprising:

   obtaining, by a first node device, first information; wherein the first node device is used for transmission with a terminal and/or a network side device;
   performing, by the first node device, measurement and reporting according to the first information;
   wherein the first information includes at least one of first measurement and reporting configuration information, first measurement resource configuration information, or first predefined information.

2. The method according to claim 1, wherein the performing, by the first node device, measurement and reporting according to the first information, includes reporting at least one of the following measurement processes:

   transmitting beam sweeping process of the network side device;

receiving beam sweeping process of a second node device;

transmitting beam sweeping process of the second node device; or,

adjustment matrix training process of the second node device;

wherein the second node device is used to forward a signal sent by the network side device for the terminal, or used to forward a signal sent by the terminal for the network side device.

3. The method according to claim 1 or 2, wherein the obtaining, by a first node device, first information, includes: obtaining first measurement resource configuration information according to a first predefined rule or the first measurement and reporting configuration information.

4. The method according to claim 2, wherein the performing, by the first node device, measurement and reporting according to the first information, includes: measuring, by the first node device, a first measurement resource corresponding to the first measurement resource configuration information, and reporting a measurement result.

5. The method according to claim 4, wherein the first measurement resource configuration information includes at least one indication parameter; the at least one indication parameter is used to indicate quasi-co-located QCL information of the first measurement resource;

the measuring, by the first node device, a first measurement resource corresponding to the first measurement resource configuration information, includes:

measuring the first measurement resource according to the indication parameter.

6. The method according to claim 5, wherein the performing, by the first node device, measurement and reporting according to the first information, includes:

reporting, by the first node device, first content, in a case where the at least one indication parameter is configured as a first value; wherein the first content includes at least one of a channel state information reference signal resource indication CRI or a synchronization signal block resource indication SSB RI;

wherein when the at least one indication parameter is configured as the first value, QCL information of at least two resources in the first measurement resources is different.

7. The method according to claim 1, wherein the performing, by the first node device, measurement and reporting according to the first information, includes:

determining a first reporting resource according to an indication of the network side device or a second predefined rule; and

performing the measurement report on the first reporting resource.

8. The method according to claim 1, wherein the method further includes: reporting relevant information of the adjustment matrix of the first node device; wherein the relevant information of the adjustment matrix includes at least one of codebook or precoding information; wherein the adjustment matrix is used to perform receiving and/or sending processing on the first node device.

9. The method according to claim 8, wherein the first measurement and reporting configuration information further includes: first indication information for indicating the control node to report the relevant information of the adjustment matrix; and

the reporting the relevant information of the adjustment matrix of the first node device, includes:

reporting the relevant information of the adjustment matrix according to the first indication information.

10. The method according to claim 5, wherein the method further includes:

obtaining relevant information of the adjustment matrix indicated by the network side device; wherein the relevant information of the adjustment matrix includes at least one of codebook or precoding information, and the adjustment matrix is used to perform receiving and/or sending processing on the first node device;

determining the adjustment matrix of the first node device according to the relevant information of the adjustment matrix.

11. The method according to claim 8 or 10, wherein the codebook includes at least one of the following:

codebook of matrix $W_T \O W_R$;
codebook of matrix $W_T W_R \O$;
codebook of matrix $W_R \O$;
codebook of matrix $W_T$;
codebook of matrix $\O$;
codebook of matrix $W_R$;
codebook of matrix $W_T \O$; or,
codebook of matrix $\O W_R$;
wherein $W_T$ is used by the first node device to perform transmission processing on the signal sent to the terminal; $W_R$ is used by the first node device to perform receiving process on the signal sent by the network side device, and $\O$ is used for phase control.

12. The method according to claim 1 or 2, wherein the first node device includes a control node, the control node is used to adjust or control the second node device, and the second node device includes an RIS node or a relay node.

13. A measurement and reporting method, comprising:

obtaining, by a terminal, first information;
performing, by the terminal, measurement and reporting on a first link or a second link according to the first information;
wherein the first information includes at least one of second measurement and reporting configuration information, second measurement resource configuration information, or second predefined information; the first link is a transmission link between a network side device and the terminal, and the second link is a transmission link between the terminal and a first node device, the first node device is used for transmission with the terminal and/or the network side device.

14. The method according to claim 13, wherein the obtaining, by a terminal, first information, includes:
obtaining second measurement resource configuration information according to a third predefined rule or the second measurement and reporting configuration information.

15. The method according to claim 13 or 14, wherein the second measurement resource configuration information includes at least one indication parameter, and the at least one indication parameter is used to indicate QCL information of the second measurement resource corresponding to the second measurement resource configuration information;
the performing, by the terminal, beam measurement and reporting on the first link or the second link according to the first information, includes:
measuring, by the terminal, the second measurement resource for the first link or the second link according to the indication parameter.

16. The method according to claim 15, wherein the performing, by the terminal, measurement and reporting on a first link or a second link according to the first information, includes:

reporting, by the terminal, first content, in a case where the at least one indication parameter is configured as a first value; wherein the first content includes at least one of CRI or SSB RI;
wherein when the at least one indication parameter is configured as the first value, QCL information of at least two resources in the second measurement resources is different.

17. The method according to claim 13, wherein the measurement and reporting configuration information further includes:
reception filter information of the terminal.

18. A measurement and reporting method, comprising:
sending, by a network side device, first information; wherein the first information is used to indicate a first node device to perform measurement and reporting and/or to indicate a terminal to perform measurement and reporting for a first link or a second link, wherein the first node device is used to perform transmission with the terminal and/or the network side device, the first link is a transmission link between the network side device and the terminal, and the second link is a transmission link between the terminal and the first node device.

19. The method according to claim 18, wherein the first information includes at least one of the following:

first measurement and reporting configuration information, first measurement resource configuration information and/or first predefined information; or,

second measurement and reporting configuration information, second measurement resource configuration information and/or second predefined information.

20. The method according to claim 19, wherein the first measurement resource configuration information includes at least one indication parameter; the at least one indication parameter is used to indicate QCL information of a first measurement resource corresponding to the first measurement resource configuration information;

or, the second measurement resource configuration information includes at least one indication parameter, and the at least one indication parameter is used to indicate QCL information of a second measurement resource corresponding to the second measurement resource configuration information.

21. A measurement and reporting device, applied to a first node device, comprising: a memory, a transceiver, and a processor;

wherein the memory is used to store a computer program; the transceiver is used to send and receive data under the control of the processor; the processor is used to read the computer program in the memory and perform the following operations:

obtaining first information, wherein the first node device is used for transmission with a terminal and/or a network side device;

performing measurement and reporting according to the first information;

wherein the first information includes at least one of first measurement and reporting configuration information, first measurement resource configuration information, or first predefined information.

22. The device according to claim 21, wherein the processor is used to execute the computer program to perform the following operations:

reporting at least one of the following measurement processes:

transmitting beam sweeping process of the network side device;

receiving beam sweeping process of a second node device;

transmitting beam sweeping process of the second node device; or,

adjustment matrix training process of the second node device.

23. The device according to claim 21, wherein the processor is used to execute the computer program to perform the following operations:

obtaining first measurement resource configuration information according to a first predefined rule or the first measurement and reporting configuration information.

24. The device according to claim 21 or 23, wherein the processor is used to execute the computer program to perform the following operations:

measuring a first measurement resource corresponding to the first measurement resource configuration information, and reporting a measurement result.

25. The device according to claim 24, wherein the first measurement resource configuration information includes at least one indication parameter; the at least one indication parameter is used to indicate quasi-co-located QCL information of the first measurement resource;

the measuring, by the first node device, the first measurement resource corresponding to the first measurement resource configuration information, includes:

measuring the first measurement resource according to the indication parameter.

26. The device according to claim 25, wherein the processor is used to execute the computer program to perform the following operations:

reporting first content, in a case where the at least one indication parameter is configured as a first value; wherein the first content includes at least one of a channel state information reference signal resource indication CRI or a synchronization signal block resource indication SSB RI;

wherein when the at least one indication parameter is configured as the first value, QCL information of at least two resources in the first measurement resources is different.

27. The device according to claim 21, wherein the processor is used to execute the computer program to perform the following operations:

    determining a first reporting resource according to an indication of the network side device or a second predefined rule;
    performing the measurement report on the first reporting resource.

28. The device according to claim 21, wherein the processor is used to execute the computer program to perform the following operations:
reporting relevant information of an adjustment matrix of the first node device, wherein the relevant information of the adjustment matrix includes at least one of codebook or precoding information; wherein the adjustment matrix is used to perform receiving and/or sending processing on the first node device.

29. The device according to claim 28, wherein the first measurement and reporting configuration information further includes: first indication information for indicating the control node to report the relevant information of the adjustment matrix; and the processor is used to execute the computer program to perform the following operations:
reporting the relevant information of the adjustment matrix according to the first indication information.

30. The device according to claim 25, wherein the processor is used to execute the computer program to perform the following operations:

    obtaining relevant information of the adjustment matrix indicated by the network side device; wherein the relevant information of the adjustment matrix includes at least one of codebook or precoding information, and the adjustment matrix is used to perform receiving and/or sending processing on the first node device;
    determining the adjustment matrix of the first node device according to the relevant information of the adjustment matrix.

31. The device according to claim 28 or 30, wherein the codebook includes at least one of the following:

    codebook of matrix $W_T \emptyset W_R$;
    codebook of matrix
    codebook of matrix $W_R \emptyset$;
    codebook of matrix $W_T$;
    codebook of matrix $\emptyset$;
    codebook of matrix $W_R$;
    codebook of matrix $W_T \emptyset$;
    codebook of matrix $\emptyset W_R$;
    wherein $W_T$ is used by the first node device to perform transmission processing on the signal sent to the terminal; $W_R$ is used by the first node device to perform receiving process on the signal sent by the network side device, and $\emptyset$ is used for phase control.

32. The device according to claim 21 or 22, wherein the first node device includes a control node, the control node is used to adjust or control the second node device; the second node device includes an RIS node or a relay node.

33. A measurement and reporting device, applied to a terminal, comprising: a memory, a transceiver, and a processor; wherein the memory is used to store a computer program; the transceiver is used to send and receive data under the control of the processor; the processor is used to read the computer program in the memory and perform the following operations:

    obtaining first information;
    performing measurement and reporting on a first link or a second link according to the first information;
    wherein the first information includes at least one of second measurement and reporting configuration information, second measurement resource configuration information, or second predefined information; the first link is a transmission link between a network side device and the terminal, and the second link is a transmission link between the terminal and a first node device, the first node device is used for transmission with the terminal and/or the network side device.

34. The device according to claim 33, wherein the processor is used to execute the computer program to perform the following operations:
obtaining second measurement resource configuration information according to a third predefined rule or the second measurement and reporting configuration information.

35. The device according to claim 33 or 34, wherein the second measurement resource configuration information includes at least one indication parameter, and the at least one indication parameter is used to indicate QCL information of the second measurement resource corresponding to the second measurement resource configuration information;
the processor is used to execute the computer program to perform the following operations:
measuring the second measurement resource for the first link or the second link according to the indication parameter.

36. The device according to claim 35, wherein the processor is used to execute the computer program to perform the following operations:
reporting first content, in a case where the at least one indication parameter is configured as a first value; wherein the first content includes at least one of CRI or SSB RI.

37. The device according to claim 33, wherein the measurement and reporting configuration information also includes: reception filter information of the terminal.

38. A measurement and reporting device, applied to a network side device, comprising: a memory, a transceiver, and a processor;
wherein the memory is used to store a computer program; the transceiver is used to send and receive data under the control of the processor; the processor is used to read the computer program in the memory and perform the following operations:
sending first information, wherein the first information is used to indicate a first node device to perform measurement and reporting and/or to indicate a terminal to perform measurement and reporting for a first link or a second link, wherein the first node device is used to perform transmission with the terminal and/or the network side device, the first link is a transmission link between the network side device and the terminal, and the second link is a transmission link between the terminal and the first node device.

39. The device according to claim 38, wherein the first information includes at least one of the following:

first measurement and reporting configuration information, first measurement resource configuration information and/or first predefined information; or,
second measurement and reporting configuration information, second measurement resource configuration information and/or second predefined information.

40. The device according to claim 39, wherein the first measurement resource configuration information includes at least one indication parameter; the at least one indication parameter is used to indicate QCL information of a first measurement resource corresponding to the first measurement resource configuration information;
or, the second measurement resource configuration information includes at least one indication parameter, and the at least one indication parameter is used to indicate QCL information of a second measurement resource corresponding to the second measurement resource configuration information.

41. A measurement and reporting device, applied to a first node device, comprising:

a first obtaining unit used to obtain first information, wherein the first node device is used for transmission with a terminal and/or a network side device;
a first reporting unit used to perform measurement and reporting according to the first information;
wherein the first information includes at least one of first measurement and reporting configuration information, first measurement resource configuration information, or first predefined information.

42. The device according to claim 41, wherein the performing, by the first node device, measurement and reporting according to the first information, includes reporting at least one of the following measurement processes:

transmitting beam sweeping process of the network side device;
receiving beam sweeping process of a second node device;
transmitting beam sweeping process of the second node device; or,
adjustment matrix training process of the second node device;

wherein the second node device is used to forward a signal sent by the network side device for the terminal, or used to forward a signal sent by the terminal for the network side device.

43. The device according to claim 41 or 42, wherein the first obtaining unit is used to obtain first measurement resource configuration information according to a first predefined rule or the first measurement and reporting configuration information.

44. The device according to claim 42, wherein the first reporting unit is used to measure a first measurement resource corresponding to the first measurement resource configuration information, and report a measurement result.

45. The device according to claim 44, wherein the first measurement resource configuration information includes at least one indication parameter; the at least one indication parameter is used to indicate quasi-co-located QCL information of the first measurement resource;
the first reporting unit is used to measure the first measurement resource according to the indication parameter.

46. The device according to claim 45, wherein the first reporting unit is used to report first content, in a the case where the at least one indication parameter is configured as a first value; wherein the first content includes at least one of a channel state information reference signal resource indication CRI or a synchronization signal block resource indication SSB RI;
wherein when the at least one indication parameter is configured as the first value, QCL information of at least two resources in the first measurement resources is different.

47. The device according to claim 41, wherein the first reporting unit includes:

a first determination subunit used to determine a first reporting resource according to an indication of the network side device or a second predefined rule;
a first reporting subunit used to perform the measurement report on the first reporting resource.

48. The device according to claim 41, wherein the device further includes:
a third reporting unit used to report relevant information of an adjustment matrix of the first node device, wherein the relevant information of the adjustment matrix includes at least one of codebook or precoding information; the adjustment matrix is used to perform receiving and/or sending processing on the first node device.

49. The device according to claim 48, wherein the first measurement and reporting configuration information further includes: first indication information for indicating the control node to report the relevant information of the adjustment matrix; and
the third reporting unit is used to report the relevant information of the adjustment matrix according to the first indication information.

50. The device according to claim 45, wherein the device further includes:

a third obtaining unit used to obtain relevant information of the adjustment matrix indicated by the network side device; wherein the relevant information of the adjustment matrix includes at least one of codebook or precoding information, and the adjustment matrix is used to perform receiving and/or sending processing on the first node device;
a first determining unit used to determine the adjustment matrix of the first node device according to the relevant information of the adjustment matrix.

51. The device according to claim 48 or 50, wherein the codebook includes at least one of the following:

codebook of matrix $W_T \emptyset W_R$;
codebook of matrix
codebook of matrix $W_R \emptyset$;
codebook of matrix $W_T$;
codebook of matrix $\emptyset$;
codebook of matrix $W_R$;
codebook of matrix $W_T \emptyset$;
codebook of matrix $\emptyset W_R$;

wherein $W_T$ is used by the first node device to perform transmission processing on the signal sent to the terminal; $W_R$ is used by the first node device to perform receiving process on the signal sent by the network side device, and Ø is used for phase control.

52. The device according to claim 41 or 42, wherein the first node device includes a control node, the control node is used to adjust or control the second node device.

53. A measurement and reporting device, applied to a terminal, comprising:

a second obtaining unit used to obtain first information;
a second reporting unit used to perform measurement and reporting on a first link or a second link according to the first information;
wherein the first information includes at least one of second measurement and reporting configuration information, second measurement resource configuration information, or second predefined information; the first link is a transmission link between a network side device and the terminal, and the second link is a transmission link between the terminal and a first node device, the first node device is used for transmission with the terminal and/or the network side device.

54. The device according to claim 53, wherein the second obtaining unit is used to obtain second measurement resource configuration information according to a third predefined rule or the second measurement and reporting configuration information.

55. The device according to claim 53 or 54, wherein the second measurement resource configuration information includes at least one indication parameter, and the at least one indication parameter is used to indicate QCL information of the second measurement resource corresponding to the second measurement resource configuration information;
the second reporting unit is used to measure the second measurement resource for the first link or the second link according to the indication parameter.

56. The device according to claim 55, wherein the second reporting unit is used to report first content, in a case where the at least one indication parameter is configured as a first value; wherein the first content includes at least one of CRI or SSB RI;
wherein when the at least one indication parameter is configured as the first value, QCL information of at least two resources in the second measurement resources is different.

57. The device according to claim 53, wherein the measurement and reporting configuration information further includes: reception filter information of the terminal.

58. A measurement and reporting device, applied to a network side device, comprising:
a first sending unit used to send first information, wherein the first information is used to indicate a first node device to perform measurement and reporting and/or to indicate a terminal to perform measurement and reporting for a first link or a second link, wherein the first node device is used to perform transmission with the terminal and/or the network side device, the first link is a transmission link between the network side device and the terminal, and the second link is a transmission link between the terminal and the first node device.

59. The device according to claim 58, wherein the first information includes at least one of the following:

first measurement and reporting configuration information, first measurement resource configuration information and/or first predefined information; or,
second measurement and reporting configuration information, second measurement resource configuration information and/or second predefined information.

60. The device according to claim 59, wherein the first measurement resource configuration information includes at least one indication parameter; the at least one indication parameter is used to indicate QCL information of a first measurement resource corresponding to the first measurement resource configuration information;
or, the second measurement resource configuration information includes at least one indication parameter, and the at least one indication parameter is used to indicate QCL information of a second measurement resource corresponding to the second measurement resource configuration information.

61. A processor-readable storage medium, comprising: program instructions stored thereon; wherein the program instructions are used to cause a processor to perform steps of the measurement and reporting method according to any one of claims 1 to 12, or perform steps of the measurement and reporting method according to any one of claims 13 to 17, or perform steps of the measurement and reporting method according to any one of claims 18 to 20.

FIG. 1

| obtaining, by first node device, first information | 201 |
|---|---|
| performing, by first node device, measurement and reporting according to the first information | 202 |

FIG. 2

FIG. 3

FIG. 4

FIG. 5

FIG. 6

obtaining, by a terminal, first information | 701

performing, by the terminal, measurement and reporting on first link or second link according to the first information | 702

FIG. 7

sending, by a network side device, first information, where the first information is used to indicate a first node device to perform measurement and reporting and/or to indicate a terminal to perform measurement and reporting for a first link or a second link

801

FIG. 8

first node device

910

processor

920

memory

bus interface

900

transceiver

FIG. 9

1010

processor

1020

memory

bus interface

1000

transceiver

1030

user interface

FIG. 10

network side device

1110

processor

1120

memory

bus interface

1100

transceiver

FIG. 11

first obtaining unit 1201

first reporting unit 1202

FIG. 12

second obtaining unit 1301

second reporting unit 1302

FIG. 13

first sending unit 1401

FIG. 14

## INTERNATIONAL SEARCH REPORT

| International application No. |
|---|
| **PCT/CN2023/092256** |

**A. CLASSIFICATION OF SUBJECT MATTER**

H04W24/10(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; VEN; CNKI; 3GPP: 智能超表面, 重构智能表面, 中继, 测量, 配置, 指示, 报告, 链路, RIS, relay, measurement, configuration, indication, report, link

**C. DOCUMENTS CONSIDERED TO BE RELEVANT**

| Category* | Citation of document, with indication, where appropriate, of the relevant passages | Relevant to claim No. |
|---|---|---|
| PX | CN 115913288 A (DATANG MOBILE COMMUNICATIONS EQUIPMENT CO., LTD.) 04 April 2023 (2023-04-04) description, paragraphs [0005]-[0165] | 13, 18, 33, 38, 53, 58, 61 |
| X | CN 102170334 A (ZTE CORP.) 31 August 2011 (2011-08-31) description, paragraphs [0073]-[0163] | 1, 21, 41, 61 |
| X | CN 110035450 A (VIVO COMMUNICATION TECHNOLOGY CO., LTD.) 19 July 2019 (2019-07-19) description, paragraphs [0044]-[0281] | 13, 18, 33, 38, 53, 58, 61 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 May 2023** | **10 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" align="center"><b>INTERNATIONAL SEARCH REPORT</b><br>Information on patent family members</td><td colspan="2">International application No.<br><br><b>PCT/CN2023/092256</b></td></tr>
<tr><td align="center">Patent document<br>cited in search report</td><td align="center">Publication date<br>(day/month/year)</td><td align="center">Patent family member(s)</td><td align="center">Publication date<br>(day/month/year)</td></tr>
<tr><td>CN    115913288  A</td><td align="center">04 April 2023</td><td align="center">None</td><td></td></tr>
<tr><td>CN    102170334  A</td><td align="center">31 August 2011</td><td align="center">None</td><td></td></tr>
<tr><td>CN    110035450  A</td><td align="center">19 July 2019</td><td>US    2021076241  A1<br>JP    2021519001  A<br>KR  20200097335  A<br>WO   2019137477  A1<br>KR  20220025121  A<br>EP      3739942  A1<br>EP      3739942  A4</td><td align="center">11 March 2021<br>05 August 2021<br>18 August 2020<br>18 July 2019<br>03 March 2022<br>18 November 2020<br>03 March 2021</td></tr>
</table>

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210725088